# EUROPEAN PATENT APPLICATION

(11) **EP 4 343 908 A1**
(43) Date of publication of application: **27.03.2024**
(21) Application number: 23740404.1
(22) Date of filing: 06.01.2023
(51) Int. Cl.: H01M 10/04, H01M 50/46, H01M 50/533, H01M 50/105, H01M 10/0565, H01M 10/0567, H01M 10/623, H01M 10/625

(54) **ELECTRODE ASSEMBLY AND SECONDARY BATTERY INCLUDING SAME**

(30) Priority: 14.01.2022 KR 20220005740
(71) Applicant: LG Energy Solution, Ltd., Seoul 07335 (KR)
(72) Inventor: CHOI, Seong Won, Daejeon 34122 (KR); JUNG, Su Taek, Daejeon 34122 (KR); RYU, Jihoon, Daejeon 34122 (KR); BAE, Sangho, Daejeon 34122 (KR); KIM, Minwook, Daejeon 34122 (KR); SHIN, Won Kyung, Daejeon 34122 (KR); LEE, Yong Jun, Daejeon 34122 (KR)
(74) Representative: Goddar, Heinz J.
(86) International application number: PCT/KR2023/000335
(87) International publication number: WO 2023/136560

(57) **Abstract**

An electrode assembly according to one embodiment of the present disclosure is an electrode assembly in which electrodes and separators are alternately stacked, the electrode assembly comprising: a first adhesive part formed between the electrode and the separator, and a second adhesive part formed between separators adjacent to each other among the plurality of separators contained in the electrode assembly, wherein the second adhesive part is located on the outside of the first adhesive part.

## Description

### [TECHNICAL FIELD]

### Cross Citation with Related Application(s)

This application claims the benefit of Korean Patent Application No. 10-2022-0005740 filed on January 14, 2022 with the Korean Intellectual Property Office, the entire contents of which are incorporated herein by reference.

The present disclosure relates to an electrode assembly and a secondary battery including the same, and more particularly, to an electrode assembly which prevents the defect rate in process and deterioration of a battery performance, and a secondary battery including the same.

### [BACKGROUND]

In general, there are various kinds of secondary batteries, such as a nickel cadmium battery, a nickel hydride battery, a lithium ion battery, and a lithium ion polymer battery. Such secondary batteries have been used in large-sized products that require high output, such as an electric vehicle and a hybrid electric vehicle, a power storage apparatus for storing surplus power or new and renewable energy, and a backup power storage apparatus, as well as small-sized products, such as a digital camera, a P-DVD, an MP3P, a mobile phone, a PDA, a portable game apparatus, a power tool, and an E-bike.

In order to manufacture such a lithium secondary battery, first, an electrode active material slurry is coated to a positive electrode current collector and a negative electrode current collector to manufacture a positive electrode and a negative electrode, which are stacked on both sides of a separator to form an electrode assembly having a predetermined shape. Then, the battery assembly is housed in a battery case, to which an electrolyte solution is injected to seal the battery case.

The electrode assemblies are classified into various types. There may be mentioned a simple stack type in which the positive electrodes, separators and negative electrodes are simply alternatively stacked without manufacturing a unit cell, a lamination & stack type (L&S) in which unit cells are first manufactured using positive electrodes, separators, and negative electrodes, and then these unit cells are stacked, a stack & folding type (S&F) in which a plurality of electrodes or unit cells are spaced apart and attached to one surface of a separator sheet that is long on one side, and the separator sheet is repeatedly folded in the same direction from one end, a Z-folding type in which a plurality of electrodes or unit cells are alternately attached to one surface and the other surface of a separator sheet that is long on one side, and processes of folding the separator sheet from one end in a specific direction and then folding it in the opposite direction are alternately repeated, and the like.

Among them, in order to manufacture a lamination & stack type, a stack & folding type, or a Z-folding type electrode assembly, a unit cell can be manufactured first. In general, in order to manufacture a unit cell, separators are respectively laminated on the upper and lower surfaces of the center electrode, and then an upper electrode may be further laminated on the uppermost end. Further, a laminating process of applying heat and pressure to a stacked body in which the electrode and the separator are stacked can be performed. By performing such a laminating process, a unit cell can be firmly formed by adhering between the electrode and the separator.

By the way, conventionally, until the laminating process was performed on the stacked body in which the electrode and the separator were stacked, the electrode and the separator were not adhered to each other and were only in contact with each other. Therefore, there is a problem that the electrodes are deviated from a prescribed position during the process of transporting the stacked body in order to carry out the laminating process. Further, since the laminating process applies high heat and pressure to the stacked body, the problem of electrode breakage may occur. Furthermore, recently, a separator that can be adhered to an electrode even with small heat and pressure has been developed, but such a separator has a problem that production cost is excessively consumed, and process efficiency is lowered while not being economical.

On the other hand, in an attempt to solve such problems, a method of manufacturing a unit cell using an adhesive can be considered, but in this case, the adhesive is present on the electrode surface, so that the electrode cannot perform a proper function in that portion, which causes a problem that the battery performance deteriorates.

### [DETAILED DESCRIPTION OF THE INVENTION]

### [Technical Problem]

It is an object of the present disclosure to provide an electrode assembly which prevents an electrode or a separator from deviating from a prescribed position when an electrode and a separator are stacked to manufacture a unit cell, and a secondary battery comprising the same.

It is another object of the present disclosure to provide an electrode assembly which can reduce the production cost as compared to a conventional basic unit body cell manufacturing method by lamination, reduce the defect rate in process caused by high heat and pressure, and prevent deterioration of a battery performance, and a secondary battery comprising the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided an electrode assembly in which electrodes and separators are alternately stacked, the electrode assembly comprising: a first adhesive part formed between the electrode and the separator, and a second adhesive part formed between separators adjacent to each other among the plurality of separators contained in the electrode assembly, wherein the second adhesive part is located on the outside of the first adhesive part.

A first adhesive forming the first adhesive part and a second adhesive forming the second adhesive part may be mutually different in kind.

The first adhesive may have properties of being dissolved in an electrolyte solution.

The second adhesive may have properties of being not dissolved in an electrolyte solution.

The first adhesive part may comprise an adhesive pattern that is arranged at the same position between the electrode and the separator.

The first adhesive part may comprise an adhesive pattern that is arranged so as to intersect each other between the electrode and the separator.

The separator is not coated with a binder onto the surface, or the content of the binder coated onto the surface may be 3 wt.% or less.

The electrode assembly further comprise an electrode tab protruding from one end of the electrode, wherein an outer side of the first adhesive part may be located in a direction intersecting with the protruding direction of the electrode tab.

The second adhesive part may be located between the electrode tab and the separator.

At least one of the first adhesive part and the second adhesive part may be formed by coating an adhesive in a dot shape.

The first adhesive part may be formed by coating an adhesive in a dot shape.

The second adhesive part may be formed of an adhesive layer having a plurality of openings.

The adhesive layer forming the second adhesive part may be formed by partially coating an adhesive along the whole lengthwise direction of the electrode assembly.

The electrode assembly further comprises an electrode tab protruding from one end of the electrode, wherein the whole lengthwise direction may be the same as the protruding direction of the electrode tab.

The second adhesive part may connect the extension parts of the separator extending from an edge corresponding to a long side of the electrode.

The second adhesive part may connect the extension parts of the separator extending from an edge corresponding to a long side of the electrode.

The separator may have a zigzag shape formed by folding a rectangular separator sheet.

A finished separator may be located on the outside of the second adhesive part.

The separator has long sides facing each other and short sides facing each other, and an adhesive layer forming the second adhesive part may be formed along the long side of the separator.

The electrode includes a positive electrode and a negative electrode, and the end part of the positive electrode may not be in contact with the adhesive layer forming the second adhesive part.

The adhesive layer forming the second adhesive part may have a pattern shape in which at least two lines intersect each other.

According to another embodiment of the present disclosure, there is provided a secondary battery comprising: an electrode assembly in which electrodes and separators are alternately stacked; and a pouch case that houses the electrode assembly and the electrolyte solution together, wherein the separator has at least one coating mark of the adhesive remaining on the surface in contact with the electrode, and an adhesive part is formed between separators adjacent to each other among the plurality of separators contained in the electrode assembly.

The coating mark of the adhesive may be a mark of adhesive layer dissolved in the electrolyte solution, the adhesive layer being formed between the electrode and the separator.

The adhesive layer may be formed by coating an adhesive in the form of a plurality of dots, and the coating mark of the adhesive may be formed in a dot shape at a position where the adhesive layer is formed.

The adhesive is an acrylate-based adhesive, and the electrolyte solution may be an organic solvent.

The electrode includes a first electrode and a second electrode, the separator includes an upper separator and a lower separator, and the electrode assembly may have a structure in which the lower separator, the first electrode, the upper separator, and the second electrode are alternately stacked.

The electrode includes a first electrode and a second electrode, and the electrode assembly is configured such that the first electrode is seated on the separator, to that one side of the separator is folded to cover the first electrode, and the second electrode is seated on the separator, so that the other side of the separator is folded to cover the second electrode.

An electrode tab is formed at one end of the electrode, an adhesive layer is formed between the electrode tab and the separator, and the adhesive layer may include an adhesive component that is not dissolved in the electrolyte solution.

The adhesive layer may be formed by coating an adhesive in the form of a plurality of dots.

The electrolyte solution may be a Gelyte electrolyte solution.

The electrolyte solution may include fluorine-based, poly-carbonate-based, or silicon-based oligomers.

### [Advantageous Effects]

According to some embodiments, when an electrode assembly is manufactured by alternately stacking electrodes and separators, the electrode or separator can be prevented from being deviated from a prescribed position by the adhesive.

In addition, while at least a part of the adhesive being dissolved in the electrolyte solution, coating marks of the adhesive are formed on the separator, and the coating marks of the adhesive do not contain components of the adhesive, thereby preventing deterioration of a battery performance due to the adhesive.

Further, the production cost can be reduced compared to the conventional basic unit body cell manufacturing method by lamination, and the defect rate in process caused by high heat and pressure can be reduced.

### [BRIEF DESCRIPTION OF THE DRAWINGS]

FIG. 1 is a flowchart showing a secondary battery manufacturing method according to one embodiment of the present disclosure;
FIG. 2 is a perspective view showing a basic unit body manufacturing step in the secondary battery manufacturing method according to one embodiment of the present disclosure;
FIG. 3 is a front view showing a basic unit body manufacturing step in the secondary battery manufacturing method according to one embodiment of the present disclosure;
FIG. 4 is a cross-sectional view showing an electrode assembly which is formed by stacking basic unit bodies manufactured by a basic unit body manufacturing step in the secondary battery manufacturing method according to one embodiment of the present disclosure;
FIG. 5 is a cross-sectional view showing an electrode assembly which is formed by stacking basic unit bodies manufactured by a basic unit body manufacturing step in the secondary battery manufacturing method according to another embodiment of the present disclosure;
FIGS. 6 to 9 are schematic diagrams showing basic unit body manufacturing steps of the secondary battery manufacturing method according to another embodiment of the present disclosure;
FIG. 10 is a cross-sectional view showing an electrode assembly which is manufactured by repeatedly forming basic unit bodies manufactured by a basic unit body manufacturing step in the secondary battery manufacturing method according to another embodiment of the present disclosure;
FIG. 11 is a cross-sectional view showing an electrode assembly which is manufactured by repeatedly forming basic unit bodies manufactured by a basic unit body manufacturing step in the secondary battery manufacturing method according to another embodiment of the present disclosure;
FIGS. 12 and 13 are exploded perspective views of the basic unit bodies which are manufactured by basic unit body manufacturing steps of the secondary battery manufacturing method according to another embodiment of the present disclosure;
FIG. 14 is an exploded perspective view of a basic unit body according to another embodiment of the present disclosure;
FIG. 15 is a perspective view showing an electrode assembly to which components of FIG. 14 are coupled with each other;
FIG. 16 is a cross-sectional view taken along the A-A axis of FIG. 15;
FIGS. 17 and 18 are diagrams showing an electrode assembly according to another embodiment of the present disclosure;
FIG. 19 is a photograph taken from a side surface of the electrode assembly;
FIG. 20 is a diagram showing the stiffness test of an electrode assembly;
FIG. 21 is a diagram showing an example of a device for coating an adhesive onto an electrode assembly and the coated adhesive;
FIG. 22 is a diagram showing another example of a device for coating an adhesive to an electrode assembly and the coated adhesive;
FIG. 23 is a photograph comparing adhesives coated using the **apparatuses** of FIGS. 21 and 22;
FIG. 24 is an enlarged photograph of a region B of FIG. 23;
FIG. 25 is a photograph taken during a wettability test of an electrode assembly to which the process of FIGS. 21 and 22 is applied;
FIGS. 26 and 27 are diagrams showing an electrode assembly according to another embodiment of the present disclosure;
FIG. 28 is a perspective view showing an initial cell manufacturing step in the secondary battery manufacturing method according to another embodiment of the present disclosure;
FIG. 29 is a front view showing a formation process of a secondary battery manufacturing method according to another embodiment of the present disclosure;
FIG. 30 is a view showing coating marks of the adhesive remaining on the surface of the separator; and
FIG. 31 is a flowchart showing a secondary battery manufacturing method according to another embodiment of the present disclosure.

### [DETAILED DESCRIPTION OF THE EMBODIMENTS]

Hereinafter, an exemplary embodiment will be described in detail with reference to the accompanying drawings such that the described technology can be easily put into practice by those skilled in the art. However, the described embodiments can be modified in various different ways, without being limited or restricted to embodiments below.

Parts that are irrelevant to the description, or a detailed explanation of known related technologies which may unnecessarily obscure the subject matter of the invention will be omitted to more clearly describe the described technology, and the same or similar constituent elements will be designated by the same reference numerals throughout the specification.

Further, in the drawings, the size and thickness of each element are arbitrarily illustrated for convenience of explanation, and the present disclosure is not necessarily limited to those illustrated in the drawings. In the drawings, the thickness of layers, regions, etc. are exaggerated for clarity. In the drawings, for convenience of explanation, the thicknesses of a part and a region are exaggerated.

Further, the terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, throughout the description, when a portion is referred to as "including" or "comprising" a certain component, it means that the portion can further include other components, without excluding the other components, unless otherwise stated.

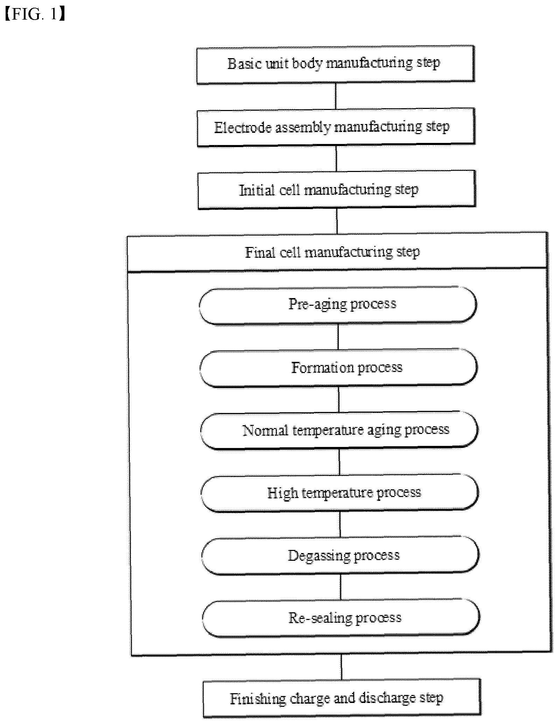

FIG. 1 is a flowchart showing a secondary battery manufacturing method according to one embodiment of the present disclosure.

Referring to FIGS. 1 to 3, a secondary battery manufacturing method according to one embodiment of the present disclosure may include a basic unit body manufacturing step, an electrode assembly manufacturing step, an initial cell manufacturing step, and a final cell manufacturing step.

Hereinafter, in the secondary battery manufacturing method according to one embodiment of the present disclosure, the basic unit body manufacturing step and the electrode assembly manufacturing step will be mainly described.

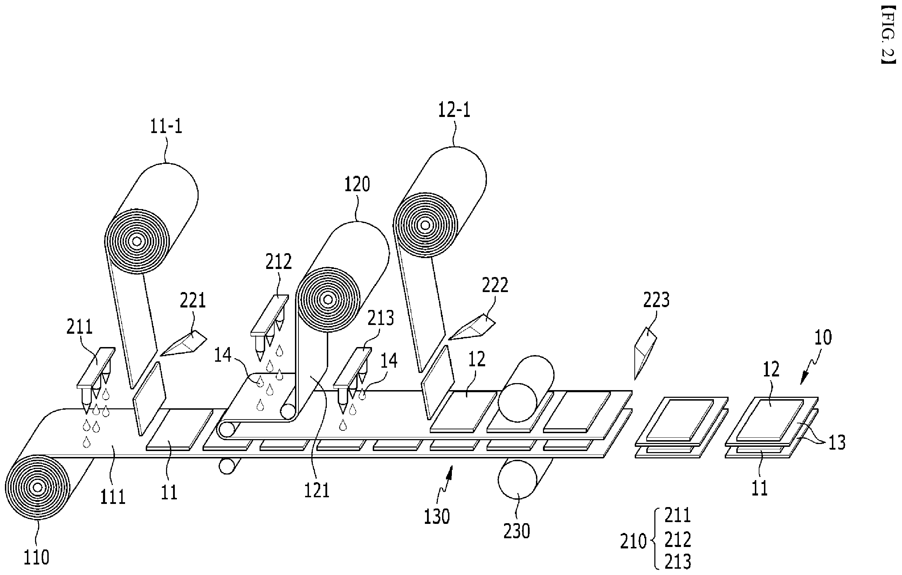

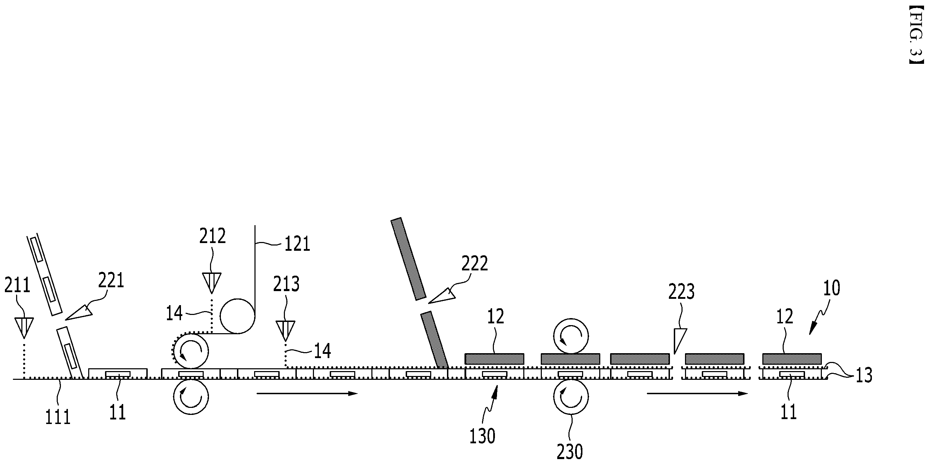

FIG. 2 is a perspective view showing a basic unit body manufacturing step in the secondary battery manufacturing method according to one embodiment of the present disclosure. FIG. 3 is a front view showing a basic unit body manufacturing step in the secondary battery manufacturing method according to one embodiment of the present disclosure.

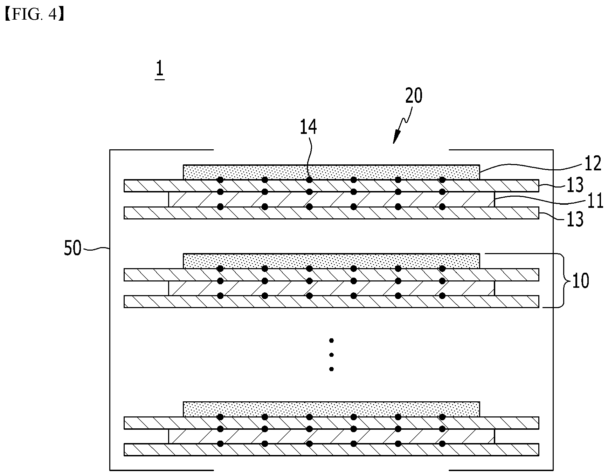

First, in the present embodiment, a basic unit body 10 may be a stacked unit body of the electrode and the separator 13. That is, the electrodes and the separators 13 are sequentially stacked to form one basic unit body 10, and the basic unit bodies 10 may be stacked in plural numbers to form an electrode stack 20 of FIG. 4.

In the secondary battery manufacturing method according to the present embodiment, the basic unit body manufacturing step may be a step of manufacturing a basic unit body 10 in which the electrodes and the separators 13 are adhered to each other by coating an adhesive 14 onto the surface of at least one of the electrode and the separator 13.

Referring to FIGS. 2 and 3, the basic unit body manufacturing step may include a step of unwinding a lower separator sheet 111 from a lower separator reel 110. Then, it may include a step of coating an adhesive 14 through a first nozzle 211 onto at least a part of one surface facing upward in the unwound lower separator sheet 111. The first nozzle 211 may coat the adhesive 14 in the form of a plurality of dots. Next, a step of seating the first electrode 11 on one surface of the lower separator sheet 111 to which the adhesive 14 is coated through the first nozzle 211 may follow. The first electrode 11 may be seated on one surface of the lower separator sheet 111 by cutting a first electrode sheet 11 unwound from a first electrode reel 11-1 into a predetermined size through a first cutter 221. The adhesive 14 coated through the first nozzle 211 can adhere the first electrode 11 and the lower separator.

Further, the secondary battery manufacturing method according to the present embodiment may include a step of unwinding an upper separator sheet 121 from an upper separator reel 120. When the upper separator sheet 121 is unwound, a step of coating an adhesive 14 through a second nozzle 212 onto at least a part of one surface of the unwound upper separator sheet 121 abutting on the first electrode 11 can be performed. The second nozzle 212 can coat the adhesive 14 in the form of a plurality of dots.

Referring to FIG. 2, after the second nozzle 212 coats the adhesive 14 onto one surface of the upper separator sheet 121, one surface and the other surface of the upper separator sheet 121 may be reversed with each other. The adhesive 14 is coated in a form that falls from the upper side to the lower side, wherein one surface of the upper separator sheet 121 abutting on the first electrode 11 is a portion facing downward in order to abut on the first electrode 11, and thus, the state when the adhesive 14 is coated and the state when the first electrode 11 is adhered may be turned upside down.

When the upper separator sheet 121 is turned upside down and adhered to the first electrode 11, subsequently, a step of coating the adhesive 14 through a third nozzle 213 onto at least a part of the other surface facing upward in the upper separator sheet 121 may be performed. That is, the third nozzle 213 may coat the adhesive 14 onto the upper part of the stacked body in which the lower separator sheet 111, the first electrode 11 and the upper separator sheet 121 are sequentially stacked from the lower side to the upper side. In this case, the third nozzle 213 may coat the adhesive 14 in the form of a plurality of dots.

Further, after the third nozzle 213 coats the adhesive 14 in this way, the basic unit body manufacturing step in the secondary battery manufacturing method according to some embodiments of the present disclosure may include a step of seating the second electrode 12 on the other surface of the upper separator sheet 121 to which the adhesive 14 is coated. The second electrode 12 may be formed by cutting the second electrode 12 sheet unwound from a second electrode reel 12-1 using a second cutter 222. Thereby, a 4-layer structure may be formed. That is, after the step of seating the second electrode 12, a four-layer structured stack 130 may be formed by sequentially stacking the lower separator sheet 111, the first electrode 11, the upper separator sheet 121, and the second electrode 12.

Further, as shown in FIG. 3, a step of arranging pressure nip rolls 230 on both upper and lower surfaces of the four-layer structured stack 130 and applying pressure to the four-layer structured stack 130 while rotating can be further included. Through the step of applying pressure through the pressure nip rolls 230, it is possible to avoid occurrence of floating portions in the four-layer structured stack 130. Accordingly, the electrodes and the separators 13 may be closely adhered to each other.

As shown in FIGS. 2 and 3, after the step of applying pressure to the four-layer structured stack 130, a step of cutting the four-layer structured stack 130 at regular intervals using a cutter to form a basic unit body 10 may be further included. The upper separator sheet 121 portion and the lower separator sheet 111 portion located in the gap between the electrodes can be cut with a third cutter 223 to manufacture a basic unit body 10.

According to the basic unit body manufacturing step in the secondary battery manufacturing method of the present embodiment, when manufacturing a unit cell (i.e., a basic unit body) by stacking an electrode and a separator, the adhesive 14 is applied beforehand each time the electrodes are seated on the separator sheets 111 and 121, thereby capable of preventing the positions of the electrodes from being deviated without using an expensive separator.

In addition, since there is no need to perform a laminating process, it is possible to reduce the defect rate in process caused by high heat and pressure. Further, since the laminator can be removed, the volume of the unit cell manufacturing apparatus can be reduced and the manufacturing process can be simplified.

A separator according to some embodiments described herein may be a CCS (Ceramic Coated Separator). Generally, the separator has an uncut film and a coating layer formed on at least one surface of the uncut film, wherein the coating layer may include an alumina powder and a binder that lump together. SRS (Safety Reinforced Separator) is coated with a large amount of binder on the surface of the coating layer, but CCS is coated with a large amount of binder on the surface of the coating layer, or is not coated with a binder on the surface of the coating layer, or the binder content distributed on the surface may be very low compared to SRS. For example, in the case of the CCS separator according to the present embodiment, the content of the binder coated on the surface of the coating layer of the separator may be about 3 wt.% or less.

If the separator is CCS, the internal electrodes included in the electrode assembly are transported in an unfixed state, and thus, there is a possibility that alignment will be disturbed during transportation. Of course, if the separator is CCS, it may be fixed with heat and pressure, but alignment of the internal electrodes may be disturbed even in the process of forming a stack of electrodes and separators and then transporting them to a heat and pressure fixing apparatus. In addition, there is a drawback that an expensive separator having a high binder content must be used in order to attach the electrode and the separator with heat and pressure. In contrast, according to the present embodiment, it is possible to increase the fixing force while preventing the alignment of the internal electrodes from being disturbed during transportation.

When the separator is a CCS, the electrolyte solution according to the present embodiment may use a Gelyte electrolyte solution. The Gelyte electrolyte solution may include a gel-type electrolyte solution. As an example, the Gelyte electrolyte solution can physically bind a liquid solvent to the inside of an oligomer and thus can have properties of suppressed volatility and almost no flowability, thus preventing leakage of liquid. The oligomer included in the Gelyte electrolyte solution according to the present embodiment may include fluorine-based, polycarbonate-based, or silicon-based oligomers. The use of fluorine-based oligomers enhances flame retardancy, serves as a scavenger for oxygen generated when the positive electrode material is decomposed due to heat generation, and has the effect of suppressing additional heat generation. When using polycarbonate-based oligomers, it has a positive electrode affinity and has a structure similar to that of an organic electrolyte solution, which results in excellent ionic conductivity. In addition, when a silicon-based oligomer is used, it is advantageous for gas reduction, particularly serves as a hydrofluoric acid scavenger (HF scavenger), and can improve the high-temperature storage environment.

If the electrode and the separator are not adhered by heat and pressure as in a conventional one, the adhesive strength is weak and the cell stiffness is lowered, which may increase the possibility of safety issue. However, when the Gelyte electrolyte solution is used as in the present embodiment, the adhesive strength may be improved by at least 50% compared to the case where a liquid electrolyte is used. Accordingly, the cell stiffness is increased by about 40% or more compared to the case where the liquid electrolyte is used, and the electrode and separator are adhered through a lamination process while using SRS as a separator, and the cell stiffness can be improved by about 19% or more as compared to the case where a liquid electrolyte is used.

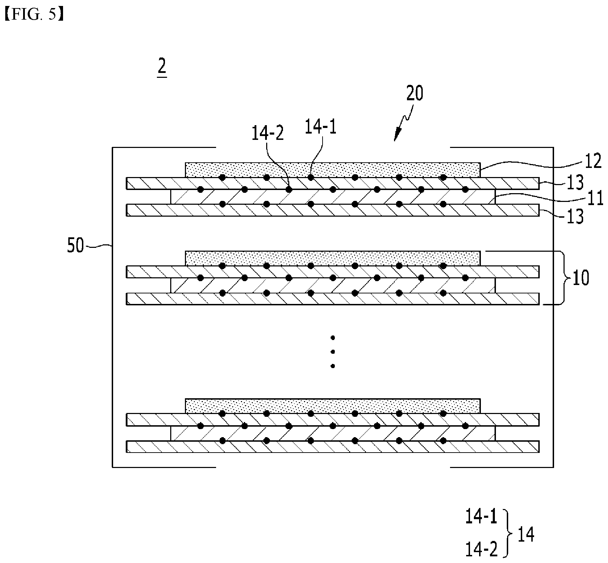

FIG. 4 is a cross-sectional view showing an electrode assembly 1 which is formed by stacking basic unit bodies 10 manufactured by a basic unit body manufacturing step in the secondary battery manufacturing method according to one embodiment of the present disclosure. FIG. 5 is a cross-sectional view showing an electrode assembly which is formed by stacking basic unit bodies manufactured by a basic unit body manufacturing step in the secondary battery manufacturing method according to another embodiment of the present disclosure.

Referring to FIG. 4, in the secondary battery manufacturing method according to the present embodiment, the electrode assembly manufacturing step may be a step of attaching a fixing tape 50 to the periphery of an electrode stack 20 formed by stacking a plurality of basic unit bodies 10 to manufacture the electrode assembly 1. Here, the electrode assembly manufacturing step is performed separately from the above-described basic unit body manufacturing step, or the above-mentioned basic unit body manufacturing step may be included in the electrode assembly manufacturing step.

Within the base unit 10, the electrodes 11 and 12 and the separator 13 are adhered to each other with the adhesive 14, and thus, the electrodes 11 and 12 and the separator 13 may maintain alignment due to the adhesive strength of the adhesive 14. Further, the basic unit body 10 and the basic unit body 10 that are stacked can be fixed in relative positions by a fixing tape 50 attached to the outside. That is, the stacked alignment state of the basic unit bodies 10 can be maintained by the fixing strength of the fixing tape 50. For reference, a state of the stack before attaching the fixing tape 50 may be referred to as an electrode stack 20, and a state of the stack after attaching the fixing tape 50 may be referred to as an electrode assembly 1.

Further, in the electrode assembly 1 manufactured according to the present embodiment, the adhesive 14 may be arranged at the same position between the electrodes 11 and 12 and the separator 13. As an example, as shown in FIG. 4, in the electrode assembly 1 of the present embodiment, an adhesive 14 located between the lower part of the first electrode 11 and the separator 13, and an adhesive 14 located between the upper part of the first electrode 11 and the separator 13 may be arranged on the same vertical line with respect to the bottom surface, and the intervals at which the adhesives 14 are arranged may be equal to each other. This can be explained similarly in the case of the adhesive 14 located between the second electrode 12 and the separator 13.

Thereby, in the electrode assembly 1 manufactured according to the present embodiment, the adhesive 14 is arranged at the same position between the electrodes 11 and 12 and the separator 13, and thus has the advantage that process time and efficiency can be increased.

Further, in the electrode assembly 2 manufactured by the secondary battery manufacturing method according to another embodiment of the present disclosure, the adhesive 14 is arranged between the electrodes 11 and 12 and the separator 13, and the adhesives 14 arranged on layers adjacent to each other may be arranged in an offset shape. As an example, as shown in FIG. 5, in the electrode assembly 2 of the present embodiment, the first adhesive 14-1 located between the lower part of the first electrode 11 and the separator 13 and the second adhesive 14-2 located between the upper part of the first electrode 11 and the separator 13 may be arranged so as to arranged misaligned with each other. At this time, the positions of the first adhesive 14-1 and the second adhesive 14-2 may only be arranged misaligned with each other, and the coated intervals may be equal to each other. This can also be explained similarly even in the case of the adhesive 14 located between the second electrode 12 and the separator 13.

As an example, in the above-mentioned basic unit body manufacturing step, as the position of at least one of the first nozzle 211, the second nozzle 212, and the third nozzle 213 shown in FIGS. 2 and 3 is adjusted, the first adhesive 14-1 and the second adhesive 14-2 may be arranged so as to intersect each other.

As another example, in the above-mentioned basic unit body manufacturing step, a separate nozzle is further arranged in addition to the first nozzle 211, the second nozzle 212, and the third nozzle 213, so that the first adhesive 14-1 and the second adhesive 14-2 can be arranged so as to intersect each other. More specifically, the separate nozzle is arranged at a different position from the first nozzle 211, the second nozzle 212, and the third nozzle 213, so that one of the first adhesive 14-1 and the second adhesive 14-2 is coated from the first nozzle 211, the second nozzle 212, and the third nozzle 213, and the other of the first adhesive 14-1 and the second adhesive 14-2 is coated from the separate nozzle. Thereby, the first adhesive 14-1 and the second adhesive 14-2 may be arranged so as to intersect each other.

However, without being limited thereto, a structure in which the first adhesive 14-1 and the second adhesive 14-2 are arranged so as to intersect each other can be coated and manufactured by various methods.

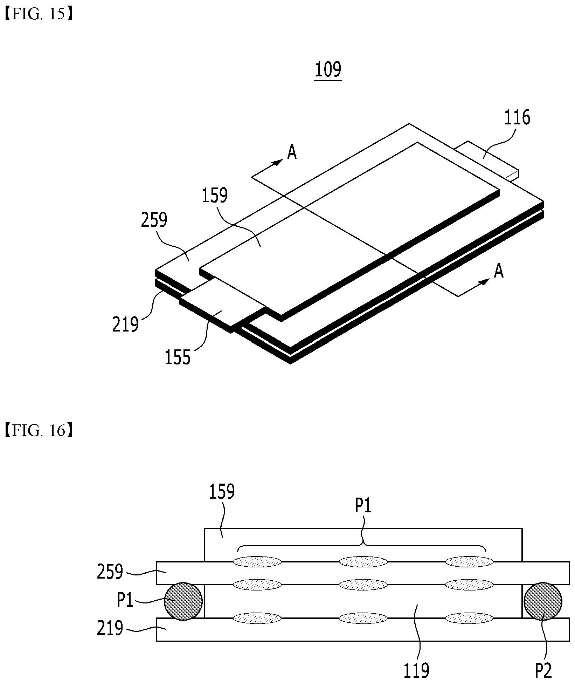

Thereby, in the electrode assembly 2 manufactured according to the present embodiment, the adhesive 14 is arranged between the electrodes 11 and 12 and the separator 13, and the adhesives 14 arranged in layers adjacent to each other are arranged in an intersecting shape, so that an increase in the thickness of the electrode assembly 2 due to the adhesive 14 can be minimized. In addition, the adhesives 14 arranged in layers adjacent to each other intersect each other, so that the adhesive 14 can be more easily dissolved in the electrolyte solution included in the initial cell 0 of FIG. 15, which will be described later.

Next, in the secondary battery manufacturing method according to another embodiment of the present disclosure, the basic unit body manufacturing step and the electrode assembly manufacturing step will be mainly described.

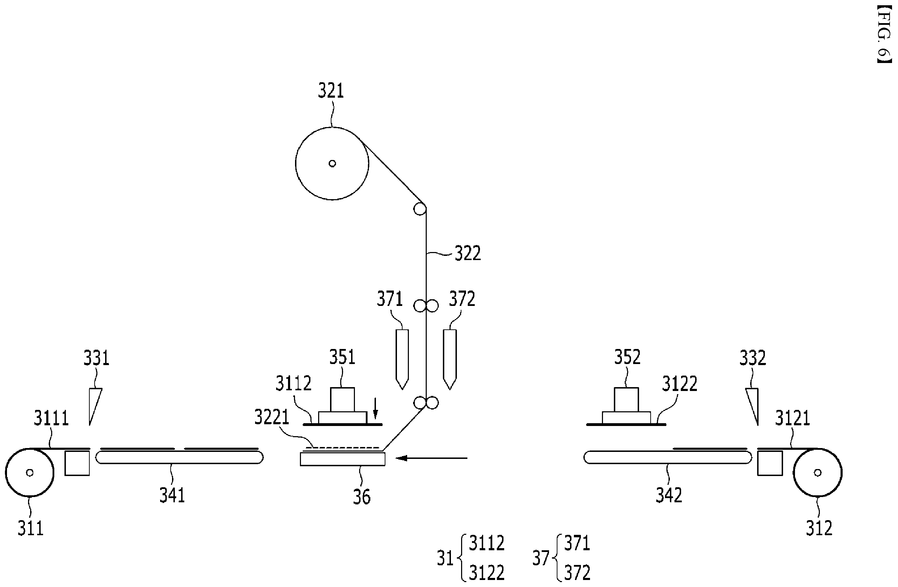

FIGS. 6 to 9 are schematic diagrams showing basic unit body manufacturing steps of the secondary battery manufacturing method according to another embodiment of the present disclosure.

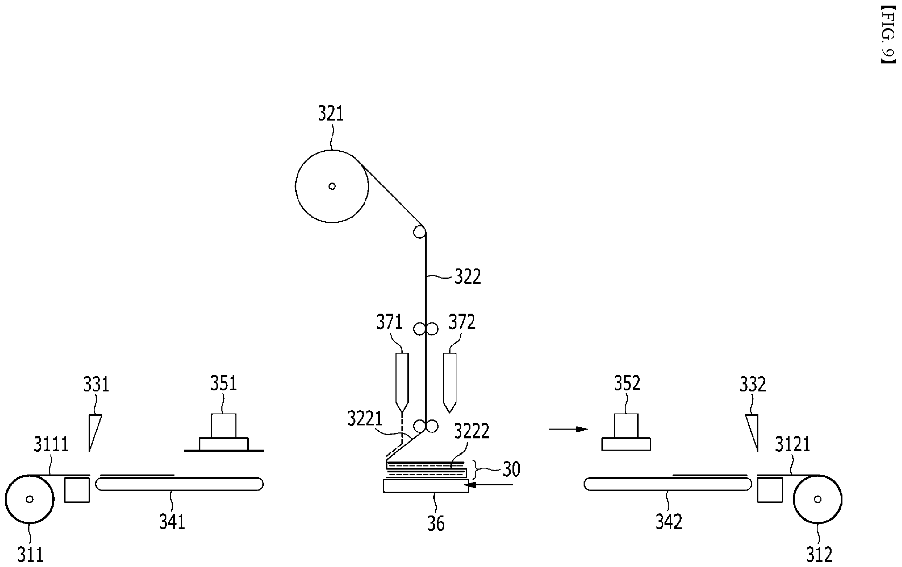

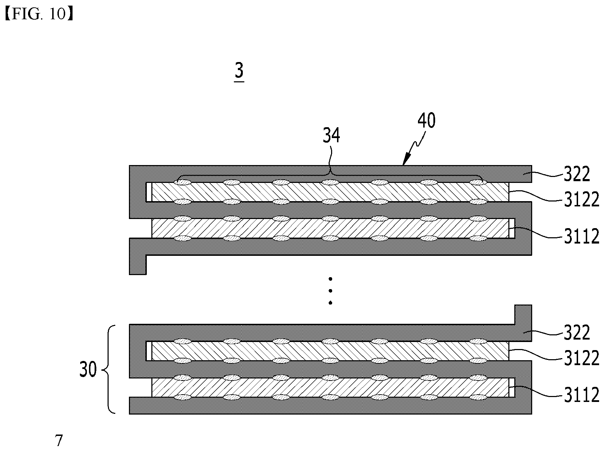

First, in the present embodiment, the basic unit body 30 of FIG. 9 may be a unit body in which the separator 322 is folded to cover the electrode 31, and the electrode 31 and the separator 322 are stacked. That is, in the basic unit body 30, one side and the other side of the separator 322 are sequentially folded to cover the electrode 31, and the electrode 31 and the separator 322 may be sequentially stacked. The electrode stack 40 of FIG. 10 in which the basic unit bodies 30 are repeatedly formed plural times can be manufactured.

Referring to FIGS. 6 to 9, the secondary battery manufacturing method according to the present embodiment includes a step of unwinding the electrode sheets 3111 and 3121 from the electrode reels 311 and 312 and forming a plurality of electrodes 31 from the electrode sheets 3111 and 3121; a step in which the electrode 31 and the separator 322 forming the stack are unwound from the separator reel 321; a step of seating the separator 322 on the upper surface of the table 36; and a step of coating the adhesive through a nozzle 37 onto at least a part of the separator 322 and the electrode 31 seated on the table 36, wherein the electrode 31 includes a first electrode 3112 and a second electrode 3122. In the present embodiment, being unwound from the separator reel 321 is referred to as the separator 322, but as will be described later, it can be seen that the separator sheet is folded to form a separator in each layer. Therefore, it can be considered that the separator sheet is unwound from the separator reel 321.

More specifically, referring to FIG. 6, in the secondary battery manufacturing method according to the present embodiment, if the first electrode sheet 3111 is unwound from the first electrode reel 311, the first cutter 331 cuts the first electrode sheet 3111 to form a plurality of first electrodes 3112. Then, if the first transport device 341 transports the first electrode 3112, a first header 351 adsorbs the first electrode 3112.

Meanwhile, referring to FIG. 6, when the separator 322 is unwound from the separator reel 321, the first region 3221 of the separator 322 is seated on the upper surface of the table 36. Then, as shown in FIG. 6, the first nozzle 371 may coat an adhesive onto at least a part of the first region 3221 of the separator 322. Here, the first nozzle 371 may coat the adhesive in the form of a plurality of dots.

Subsequently, the table 36 can move toward the first conveying apparatus 341, and the first header 351 adsorbed with the first electrode 3112 can also move toward the table 36. However, the table 36 may be fixed, without being limited thereto. When the first header 351 is located above the table 36, the first header 351 may seat the first electrode 3112 on the first region 3221 of the separator 322 to which the adhesive is coated as shown in FIG. 6.

However, without being limited thereto, unlike those shown in FIG. 6, the adhesive may not be coated to the first region 3221 of the separator 322, but the adhesive may be applied beforehand to the lower part of the first electrode 3112. That is, the first electrode 3112 may be seated on the first region 3221 of the separator 322 by the first header 351 in a state where the adhesive is coated beforehand to the lower part of the first electrode 3112,

In addition, the secondary battery manufacturing method according to the present embodiment further includes a folding step after the adhesive coating step. In the folding step, if the first electrode 3112 is seated on the separator 322, one side of the separator 322 is folded to cover the first electrode 3112, and if the second electrode 3122 is seated on the separator 322, the other side of the separator 322 can be folded to cover the second electrode 3122.

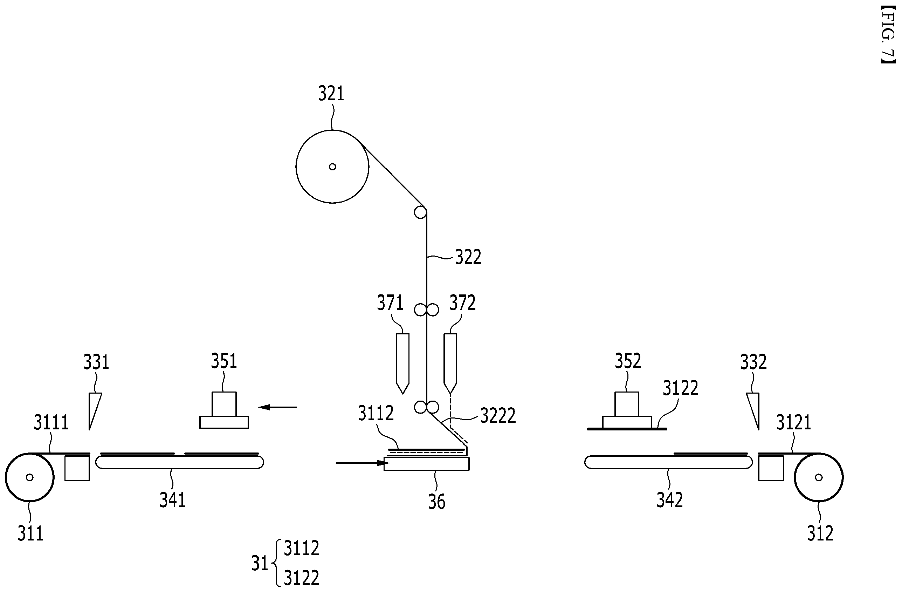

More specifically, referring to FIG. 7, after the first electrode 3112 is seated on the first area 3221, the table 36 moves toward the second transport device 342 that transports the second electrode 3122. Then, one side of the separator 322 is folded so that the second region 3222 of the separator 322 may cover the first electrode 3112. Here, before the first electrode 3112 is covered with the second region 3222 of the separator 322, an adhesive may be coated beforehand to the upper part of the first electrode 3112 or the second region 3222 of the separator 322 by the first nozzle 371.

Meanwhile, if the second electrode sheet 3121 is unwound from the second electrode reel 312, the second cutter 332 can cut the second electrode sheet 3121 to form a plurality of second electrodes 3122. Then, if the second transport device 342 transports the second electrode 3122, the second header 352 adsorbs the second electrode 3122.

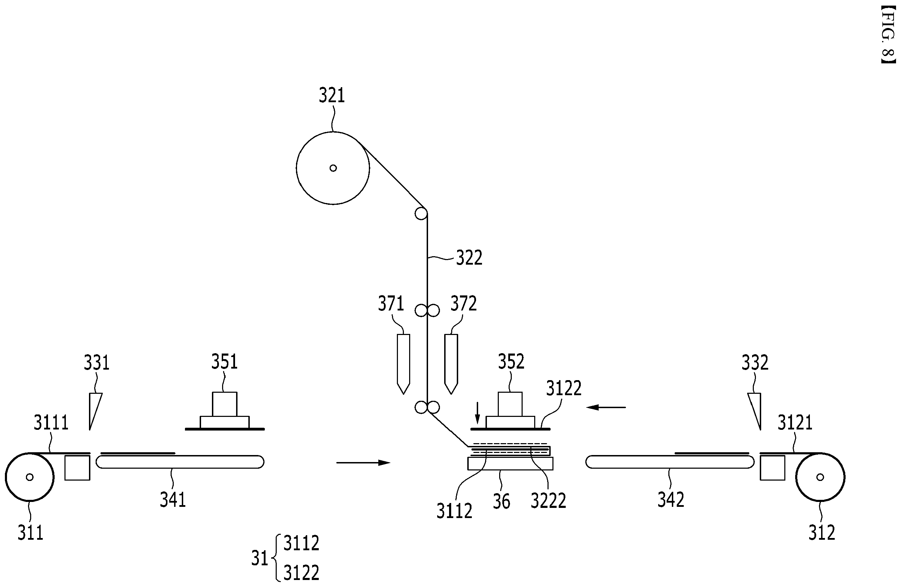

Further, as shown in FIGS. 7 and 8, when the second region 3222 of the separator 322 covers the first electrode 3112, the second nozzle 372 located above the second region 3222 coats the adhesive onto at least a part of the second region 3222 of the separator 322. Here, the second nozzle 372 may coat the adhesive in the form of a plurality of dots.

Then, referring to FIG. 8, the table 36 may move toward the second transport device 342, and the second header 352 adsorbed with the second electrode 3122 can also move toward the table 36. However, the table 36 can be fixed without being limited thereto. When the second header 352 is located above the table 36, the second header 352 can seat the second electrode 3122 on the second region 3222 of the separator 322 to which the adhesive is coated as shown in FIG. 8.

However, without being limited thereto, unlike those shown in FIG. 8, the adhesive may not be coated onto the second region 3222 of the separator 322, and the adhesive may be coated beforehand onto the lower part of the second electrode 3122. That is, the second electrode 3122 may be seated on the second region 3222 of the separator 322 by the second header 352 in a state where the adhesive is coated beforehand to the lower part of the second electrode 3122.

Subsequently, referring to FIG. 9, after the second electrode 3122 is seated on the second region 3222, the table 36 moves toward the first transport device 341 that transports the first electrode 3112. However, the table 36 may be fixed without being limited thereto. Then, the other side of the separator 322 is folded so that the first region 3221 of the separator 322 can cover the second electrode 3122. Here, before the second electrode 3122 is covered with the first region 3221 of the separator 322, an adhesive may be coated beforehand onto the upper part of the second electrode 3122 or onto the first region 3221 of the separator 322 by the second nozzle 372.

Further, as shown in FIG. 9, when the first region 3221 covers the second electrode 3122, the first nozzle 371 located above the first region 3221 coats the adhesive onto at least a part of the first region 3221 of the separator 322. Here, the first nozzle 371 may coat the adhesive in the form of a plurality of dots.

That is, by repeating the above processes, the basic unit body may be manufactured in the secondary battery manufacturing method according to the present embodiment.

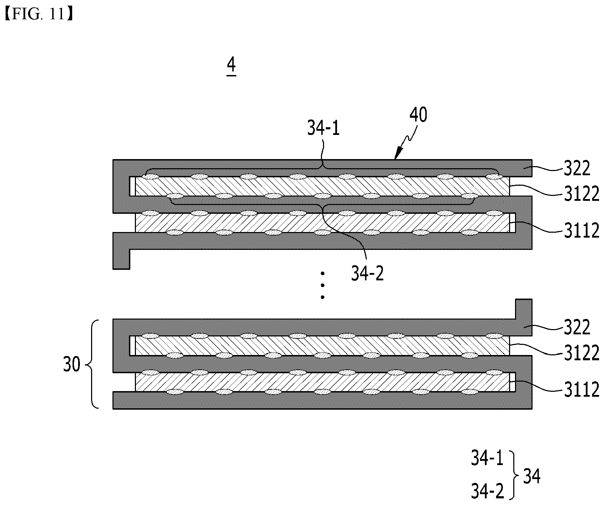

FIG. 10 is a cross-sectional view showing an electrode assembly which is manufactured by repeatedly forming basic unit bodies manufactured by a basic unit body manufacturing step in the secondary battery manufacturing method according to another embodiment of the present disclosure. FIG. 11 is a cross-sectional view showing an electrode assembly which is manufactured by repeatedly forming basic unit bodies manufactured by a basic unit body manufacturing step in the secondary battery manufacturing method according to another embodiment of the present disclosure
Referring to FIG. 10, in the secondary battery manufacturing method according to the present embodiment, the electrode assembly manufacturing step may be a step of manufacturing the electrode assembly 3 by attaching a fixing tape 50 to the periphery of the electrode stack 40 in which the basic unit bodies 30 are repeatedly formed plural times, similarly to the electrode stack 20 of FIG. 4. Further, unlike the electrode assembly 1 of FIG. 4, the electrode assembly 3 may omit the fixing tape 50 as shown in FIG. 10. Further, instead of the fixing tape 50 of FIG. 4, one end of the separator 322 of the electrode assembly 3 may cover a part of the outer surface of the electrode stack 40. Here, the electrode assembly manufacturing step may be performed separately from the above-mentioned basic unit body manufacturing step, or the above-mentioned basic unit body manufacturing step may be included in the electrode assembly manufacturing step.

Similarly to the basic unit body 10 of FIG. 4, the basic unit body 30 of the present embodiment may be in a state where the electrodes 3112 and 3122 and the separator 322 are adhered to each other with an adhesive 34. Thereby, the electrodes 3112 and 3122 and the separator 322 may maintain alignment by the adhesive strength of the adhesive 34.

In the electrode stack 40 of the present embodiment, the separator 322 covers the upper and lower parts and one side surface of the electrodes 3112 and 3122, so that the stacking and alignment state of the basic unit bodies 30 can be maintained even without a separate fixing tape 50 as shown in FIG. 4. In addition, when the fixing tape 50 of FIG. 4 is attached to the outside of the electrode stack 40 of the present embodiment, or one end of the separator 322 is wrapped, it is possible to more stably maintain the stacking alignment state of the basic unit bodies 30 with each other.

Further, in the electrode assembly 3 manufactured according to the present embodiment, the adhesive 34 may be arranged at the same position between the electrodes 3112 and 3122 and the separator 322. As an example, as shown in FIG. 10, in the electrode assembly 3 of the present embodiment, an adhesive 34 located between the lower part of the first electrode 3112 and the separator 322 and an adhesive 34 located between the upper part of the first electrode 3112 and the separator 322 may be arranged on the same vertical line based on the bottom surface of the first electrode 3112 or the separator 322, and the intervals at which the adhesives 34 are arranged may be equal to each other. This can be similarly explained even in the case of the adhesive 34 located between the second electrode 3122 and the separator 322.

Accordingly, in the electrode assembly 3 manufactured according to the present embodiment, since the adhesive 34 is arranged at the same position between the electrodes 3112 and 3122 and the separator 322, which has an advantage of increasing process time and efficiency.

In addition, in the electrode assembly 4 manufactured by the secondary battery manufacturing method according to another embodiment of the present disclosure, the adhesive 34 is arranged between the electrodes 3112 and 3122 and the separator 322, and the adhesives 34 arranged on adjacent layers may be arranged in an intersecting shape. As an example, as shown in FIG. 11, in the electrode assembly 4 of the present embodiment, a first adhesive 34-1 located between the lower part of the first electrode 3112 and the separator 322 and a second adhesive 34 -2 located between the upper part of the first electrode 3112 and the separator 322 may be arranged so as to intersect each other. At this time, the positions of the first adhesive 34-1 and the second adhesive 34-2 only intersect each other, and the coated intervals may be equal to each other. This can be similarly explained even in the case of the adhesive 14 located between the second electrode 3122 and the separator 322.

As an example, in the basic unit body manufacturing process described above, the first adhesive 34-1 and the second adhesive 34-2 may be arranged so as to intersect each other by adjusting the position of at least one of the first nozzle 371 and the second nozzle 372.

As another example, in the basic unit body manufacturing step described above, separate nozzles may be further arranged in addition to the first nozzle 371 and the second nozzle 372 so that the first adhesive 34-1 and the second adhesive 34-2 can be arranged so as to intersect each other. More specifically, the separate nozzle is arranged at a different position from the first nozzle 371 and the second nozzle 372, so that one of the first adhesive 34-1 and the second adhesive 34-2 is coated from the first nozzle 371 and the second nozzle 372, and the other of the first adhesive 34-1 and the second adhesive 34-2 is coated from the separate nozzle, and the first adhesive 34-1 and the second adhesive 34-2 may be arranged so as to intersect each other.

However, without being limited thereto, a structure in which the first adhesive 34-1 and the second adhesive 34-2 are arranged so as to intersect each other may be coated and manufactured by various methods.

Thereby, in the electrode assembly 4 manufactured according to the present embodiment, the adhesive 34 is arranged between the electrodes 3112 and 3122 and the separator 322, and the adhesives 34 arranged in layers adjacent to each other are arranged in an intersecting shape, so that the increase in thickness of the electrode assembly 4 due to the adhesive 34 can be minimized. In addition, since the adhesives 34 arranged in layers adjacent to each other intersect each other, so that the adhesive 34 can be more easily dissolved in the electrolyte solution included in the initial cell 0 of FIG. 15, which will be described later.

Next, the above-mentioned basic unit bodies 10 and 30 will be mainly described.

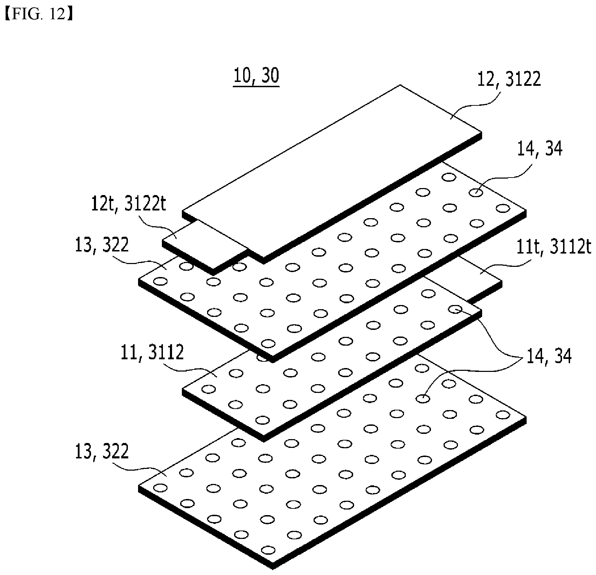

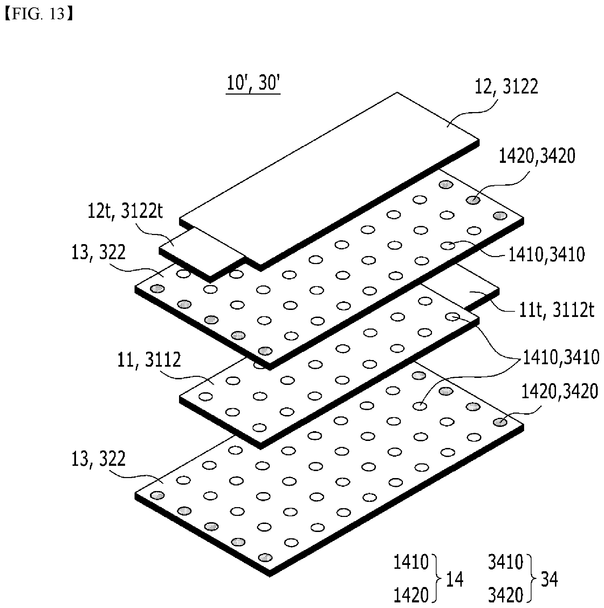

FIGS. 12 and 13 are exploded perspective views of the basic unit bodies which are manufactured by basic unit body manufacturing steps of the secondary battery manufacturing method according to another embodiment of the present disclosure;
Referring to FIG. 12, the basic unit body 10 may have a structure in which a separator 13, a first electrode 11, a separator 13 and a second electrode 12 are alternately stacked as shown in FIGS. 2 to 5. Here, the separator 13 located below the first electrode 11 is referred to as a lower separator, and the separator 13 located below the second electrode 12 is referred to as an upper separator.

Even in the case of the basic unit body 30, it may have a structure in which the first electrode 3112, the separator 322 and the second electrode 3122 are alternately stacked in a zigzag shape in which the separator 322 is folded to cover the electrodes 3112 and 3122 as shown in FIGS. 6 to 11. However, in FIG. 12, for convenience of explanation, the surface on which the separator 322 is folded is omitted.

In the basic unit bodies 10 and 30, first electrode tabs 11t and 3112t are formed at one end of the first electrodes 11 and 3112, and a second electrode tab 12t or 3122t may be formed at one end of the second electrode 12 or 3122. Here, the first electrodes 11 and 3112 and the second electrodes 12 and 3122 may be arranged so that the first electrode tabs 11t and 3112t and the second electrode tabs 12t and 3122t face different directions.

Here, the adhesive layers 14 and 34 may be formed between the first electrodes 11 and 3112 and the separators 13 and 322 and between the second electrodes 12 and 3122 and the separators 13 and 322. As an example, the adhesive layers 14 and 34 may be formed by coating an adhesive in the form of a plurality of dots as shown in FIG. 12. Further, the plurality of dots may be arranged at regular intervals. In addition, the adhesive layers 14 and 34 may include an adhesive component dissolved in an electrolyte solution included in the initial cell 0 of FIG. 15, which will be described later.

Thus, in the basic unit bodies 10 and 30 of the present embodiment, the adhesive layers 14 and 34 are arranged in a plurality of dot shapes, and thus, can be more easily dissolved in the electrolyte solution. In addition, the adhesive layers 14 and 34 include an adhesive component dissolved in the electrolyte solution, so that in the final battery cell, the adhesive layers 14 and 34 do not remain on the surfaces of the first electrodes 11 and 3112 and the second electrodes 12 and 3122, which can prevent deterioration of a cell performance due to the adhesive layers 14 and 34.

Referring to FIG. 13, the basic unit bodies 10' and 30' can be described in substantially the same manner as the basic unit bodies 10 and 30 of FIG. 12, and the adhesive layers 14 and 34 will be mainly described below.

In the basic unit bodies 10' and 30' according to the present embodiment, the adhesive layers 14 and 34 may include first adhesive layers 1410 and 3410 and second adhesive layers 1420 and 3420. Here, the first adhesive layers 1410 and 3410 may be located between the center of the first electrode 11 and 3112 and the separator 13 and 322 and between the center of the second electrode 12 and 3122 and the separator 13 and 322.

As an example, as shown in FIG. 13, the second adhesive layers 1420 and 3420 may be located at both ends of the first electrode tabs 11t and 3112t or the separators 13 and 322 adjacent to the first electrode tabs 11t and 3112t. More specifically, the second adhesive layers 1420 and 3420 may be located between the first electrode tabs 11t and 3112t and the separators 13 and 322 and between the second electrode tabs 12t and 3122t and the separators 13 and 322.

As another example, unlike those shown in FIG. 13, the second adhesive layers 1420 and 3420 may be formed only on a portion between the first electrode tabs 11t and 3112t and the separators 13 and 322 where the first electrode tabs 11t and 3112t and the separators 13 and 322 face each other, and may be formed only on a portion between the second electrode tabs 12t and 3122t and the separators 13 and 322 where the second electrode tabs 12t and 3122t and the separators 13 and 322 face each other.

At this time, the first adhesive layers 1410 and 3410 and the second adhesive layers 1420 and 3420 may be formed by coating an adhesive in the form of a plurality of dots. The first adhesive layers 1410 and 3410 are formed of a first adhesive, and the second adhesive layers 1420 and 3420 may be formed of a second adhesive.

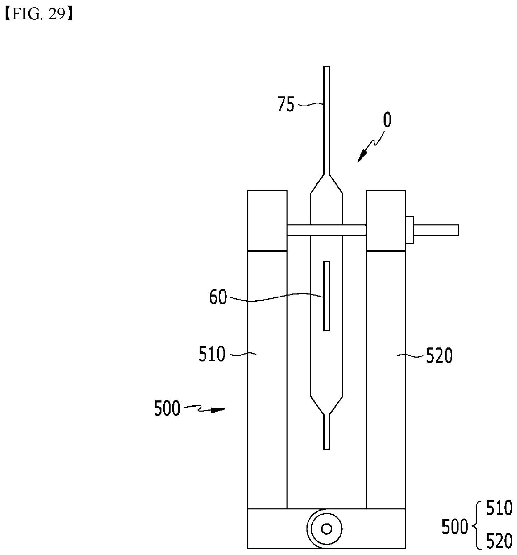

Here, the first adhesive forming the first adhesive layers 1410 and 3410 may include an adhesive component that is dissolved in an electrolyte solution included in the initial cell 0 of FIG. 29 described later, as shown in the adhesive layers 14 and 34 of FIG. 12. Alternatively, the second adhesive forming the second adhesive layers 1420 and 3420 may include an adhesive component that is not dissolved in the electrolyte solution.

As an example, in the above-mentioned basic unit body manufacturing step, as the type of adhesive coated from at least one of the nozzles 210 of FIGS. 2 and 3 or at least one of the nozzles 37 of FIGS. 6 to 9 is changed during the manufacturing process, first adhesive layers 1410 and 3410 and second adhesive layers 1420 and 3420 may be formed, respectively. Specifically, the adhesive forming the first adhesive layer 1410 or 3410 and the second adhesive layer 1420 or 3420 may be coated through one nozzle or may be coated through different nozzles from each other.

As another example, in the above-mentioned basic unit body manufacturing step, a separate nozzle is further arranged in addition to the nozzle 210 of FIGS. 2 and 3 or the nozzle 37 of FIGS. 6 to 9 to form the first adhesive layers 1410 and 3410 and second adhesive layers 1420 and 3420, respectively. More specifically, the separate nozzles are arranged adjacent to both ends of the separators 13 and 322, so that first adhesive layers 1410 and 3410 are formed from the nozzle 210 of FIGS. 2 and 3 or the nozzle 37 of FIGS. 6 to 9, and second adhesive layers 1420 and 3420 may be formed from the separate nozzles.

However, without being limited thereto, the first adhesive layers 1410 and 3410 and the second adhesive layers 1420 and 3420 can be formed by coating different adhesives by various methods.

Thereby, in the basic unit bodies 10' and 30' of the present embodiment, the first adhesive layers 1410 and 3410 are located between the center of the first electrodes 11 and 3112 and the separators 13 and 322 and between the center of the second electrodes 12 and 3122 and the separators 13 and 322, so that in the final battery cell, the first adhesive layers 15 and 35 do not remain on the surfaces of the first electrodes 11 and 3112 and the second electrodes 12 and 3122, and thus, deterioration of a cell performance due to the first adhesive layers 1410 and 3410 can be prevented.

In addition, in the basic unit bodies 10' and 30' of the present embodiment, the second adhesive layers 1420 and 3420 are located between the first electrode tabs 11t and 3112t and the separators 13 and 322 and between the second electrode tabs 12t and 3122t, so that in the final battery cell, the second adhesive layers 1420 and 3420 is not dissolved in the electrolyte solution, so that the separators 13 and 322 facing the first electrode tabs 11t and 3112t and the second electrode tabs 12t and 3122t can be prevented from being folded. In addition, the second adhesive layers 1420 and 3420 may prevent the first electrodes 11 and 3112 and the second electrodes 12 and 3122 from separating from the separators 13 and 322 in the final battery cell.

In addition, the second adhesive layers 1420 and 3420 are located between the pair of separators 13 and 322 facing each other, and may be formed on a portion other than the portion where the separators 13 and 322 and the first electrodes 11 and 3112 and/or the second electrodes 12 and 3122 are in contact with each other. In other words, the second adhesive layers 1420 and 3420 are located between the pair of separators 13 and 322 facing each other and may not come into contact with the first electrodes 11 and 3112 and the second electrodes 12 and 3122.

Thereby, in the basic unit bodies 10' and 30' of the present embodiment, the second adhesive layers 1420 and 3420 are formed at a position avoiding a portion where the first electrodes 11 and 3112 and/or the second electrodes 12 and 3122 are in contact with the separators 13 and 322, so that the second adhesive layers 1420 and 3420 may not interfere with the movement of lithium ions between the first electrodes 11 and 3112 and/or the second electrodes 12 and 3122. That is, the second adhesive layers 1420 and 3420 can prevent the above-mentioned separators 13 and 322 from being folded without deteriorating a cell performance, and can prevent the first electrodes 11 and 3112 and the second electrodes 12 and 3122 from separating from the separators 13 and 322.

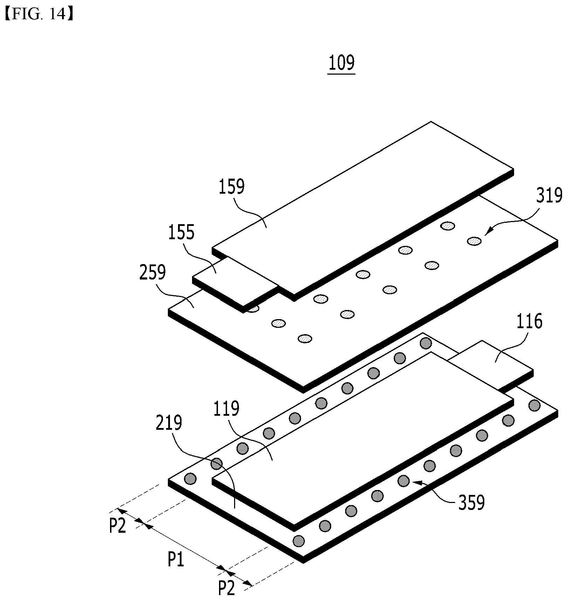

FIG. 14 is an exploded perspective view of a basic unit body according to yet another embodiment of the present disclosure. FIG. 15 is a perspective view showing an electrode assembly to which components of FIG. 14 are coupled with each other. FIG. 16 is a cross-sectional view taken along the A-A axis of FIG. 15.

Referring to FIGS. 14 and 15, the electrode assembly according to the present embodiment includes a plurality of basic unit bodies, and the basic unit body 109 according to the present embodiment includes a first adhesive part P1 formed between the electrodes 119 and 159 and the separators 219 and 259 along the direction in which the electrodes 119 and 159 and the separators 219 and 259 are stacked, and a second adhesive part P2 formed between the separators 219 and 259 adjacent to each other along the direction in which the electrodes 119 and 159 and the separators 219 and 259 are stacked among the plurality of separators 219 and 259. The second adhesive part P2 is located on the outside of the first adhesive part P1 along the direction in which the electrodes 119 and 159 and the separators 219 and 259 are stacked.

More specifically, the separators 219 and 259 include a lower separator 219 and an upper separator 259, and the electrodes 119 and 159 include a first electrode 119 and a second electrode 159, wherein the lower separator 219, the first electrode 119, the upper separator 259 and the second electrode 159 may be stacked in this order.

Here, the first electrode 119 may include a first electrode tab 116 protruding in one direction, and the second electrode 159 may include a second electrode tab 155 protruding in one direction. As an example, as shown in FIGS. 14 and 15, the upper separator 259 may be stacked to be located between the first electrode 119 and the second electrode 159, and the first electrode tab 116 of the first electrode 119 and the second electrode tab 155 of the second electrode 159 may be stacked to be located in opposite directions. However, without being limited thereto, a structure in which the first electrode tab 116 and the second electrode tab 155 are stacked in the same direction may also be included in the present embodiment. The outer side of the first adhesive part P1 described above may be located in a direction intersecting the direction in which the electrode tabs 116 and 155 protrude.

Here, the first electrode 119 and the second electrode 159 may each include an electrode current collector and an active material layer located on the electrode current collector. Here, the active material layer may be made of an electrode composition containing an electrode active material. More specifically, the first electrode 119 and the second electrode 159 may be a positive electrode or a negative electrode. Here, the positive electrode may include an active material layer containing a positive electrode current collector and a positive electrode active material, and the negative electrode may include an active material layer containing a negative electrode current collector and a negative electrode active material. As an example, the first electrode 119 may be a negative electrode, and the second electrode 159 may be a positive electrode. However, without being limited thereto, the opposite case may also be included in the present embodiment.

The separators 219 and 259 may separate the first electrode 119 and the second electrode 159 and provide a moving passage of lithium ion. Further, the separators 219 and 259 include a lower separator 219 and an upper separator 259, wherein the lower separator 219 and the upper separator 259 may be made of different or identical materials.

As an example, the separators 219 and 259 can be used without particular limitation as long as they are normally used as separators in lithium secondary batteries, but can be a CCS (Ceramic Coated Separator) as the separator as described above.

Referring to FIGS. 14 and 16, the first adhesive part P1 may be located in at least one between the first electrode 119 and the lower separator 219, between the first electrode 119 and the upper separator 259, and between the second electrode 159 and the upper separator 259.

Thereby, the first adhesive part P1 may fix the first electrode 119 and the second electrode 159 to the lower separator 219 and/or the upper separator 259, respectively. That is, the first adhesive part P1 can prevent movement between the electrodes 119 and 159 and the separators 219 and 259, and can prevent deformation and breakage of the electrodes 119 and 159 and the separators 219 and 259.

In addition, the second adhesive part P2 may be located between the upper separator 259 and the lower separator 219. More specifically, the second adhesive part P2 may be located between an end of the lower separator 219 and an end of the first electrode 119. Further, the second adhesive part P2 may be located between an end of the upper separator 259 and an end of the first electrode 119. In other words, the second adhesive part P2 is located on the surfaces of the separators 219 and 259 that are not in contact with the first electrode 119, and the second adhesive part P2 is located along the periphery of the first electrode 119. Here, the second adhesive part P2 may also be selectively located at a portion where the electrode tabs 116 and 155 protruding from the electrodes 119 and 159 are located.

Accordingly, while the first electrode 119 being located between the upper separator 259 and the lower separator 219, the upper separator 259 and the lower separator 219 can be fixed to each other by the second adhesive part P2, thereby preventing the first electrode 119 from moving between the upper separator 259 and the lower separator 219. In other words, the second adhesive part P2 can fix the upper separator 259 and the lower separator 219 to each other along the periphery of the first electrode 119 to limit a space in which the first electrode 119 can move, thereby preventing deformation and damage of the first electrode 119.

According to the present embodiment, the first adhesive 319 forming the first adhesive part P1 and the second adhesive 359 forming the second adhesive part P2 may be mutually different in kind from each other. Specifically, the first adhesive has properties of being dissolved in an electrolyte solution, and the second adhesive may have properties of being not dissolved in the electrolyte solution.

The contents of the adhesives 14 and 34 described with reference to FIGS. 4, 5, 10, 11, 12, and 13 are all applicable to the first adhesive forming the first adhesive part P1 according to the present embodiment. In addition, the description concerning the separator described above is also applicable to this embodiment.

Further, the first adhesive part P1 and the second adhesive part P2 may be formed in a pattern including a plurality of dots, respectively, as shown in FIGS. 14 and 16. More specifically, the plurality of dots may be spaced apart from each other. Here, the distance between the plurality of dots may be adjusted to be the same or different from each other, if necessary.

The second adhesive part may be formed by partially coating an adhesive along the whole lengthwise direction of the electrode assembly. The lengthwise direction may be the same as the direction in which the electrode tabs 116 and 155 protrude.

Thereby, the first adhesive part P1 and the second adhesive part P2 may be formed in the pattern described above. The electrode assembly including the basic unit body 109 is mounted to a case to form a battery cell (secondary battery), and then when injecting the electrolyte solution into the case, the electrode assembly may be rapidly impregnated.

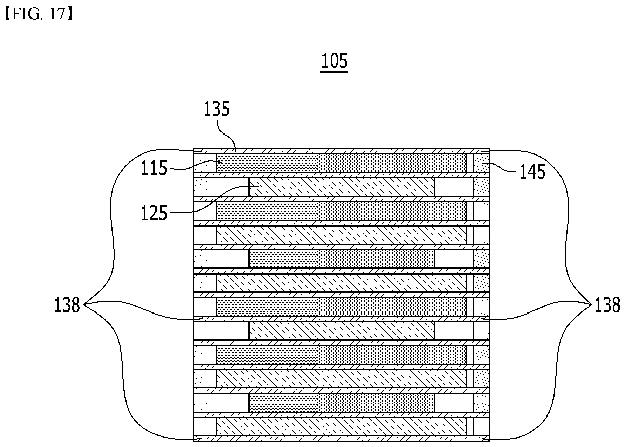

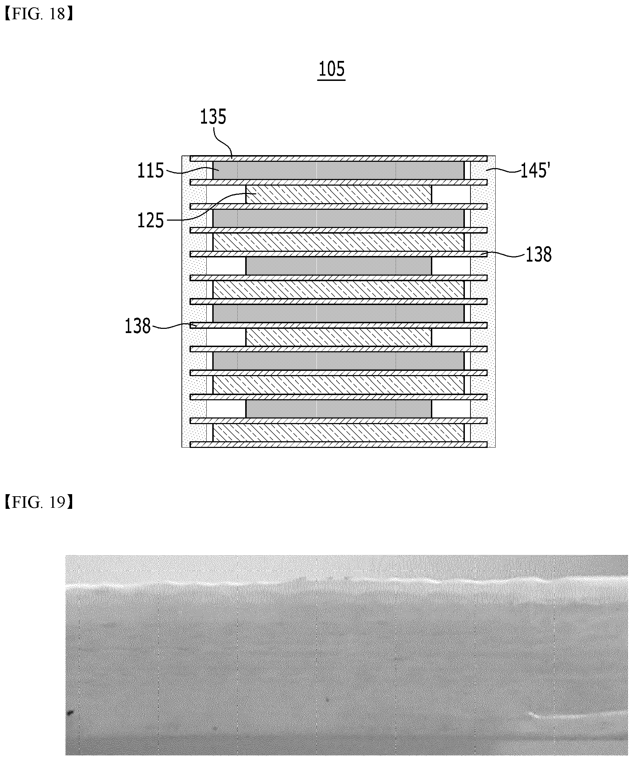

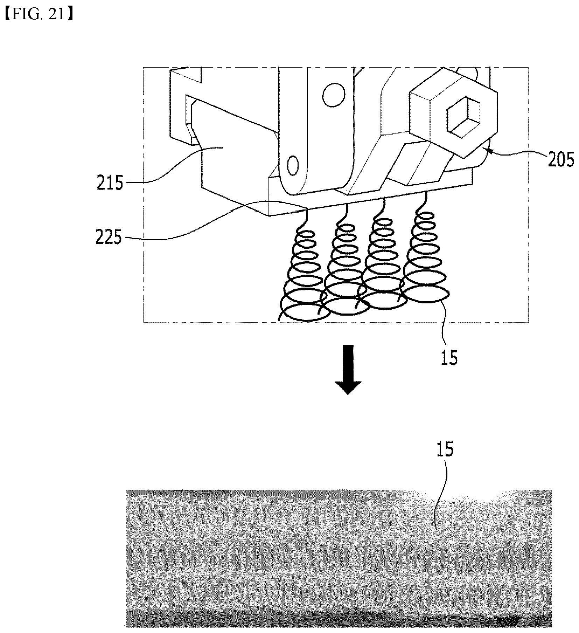

More specifically, since the plurality of dots are spaced apart from each other in the first adhesive part P1 and the second adhesive part P2, there is an advantage that the electrolyte solution can flow between the plurality of dots. That is, according to the present embodiment, the manufacturing time of the battery cell can be relatively shortened, and the yield can also be improved. However, the adhesive pattern formed on the second adhesive part P2 is not limited to the dot pattern, but may be formed in a swirl pattern as shown in FIG. 21. In addition, the contents concerning the adhesive layers 145 and 145' described later with reference to FIGS. 17 and 18 are all applicable to the second adhesive forming the second adhesive part P2 according to the present embodiment.

An electrode assembly according to another embodiment of the present disclosure will be described below.

FIGS. 17 and 18 are diagrams showing an electrode assembly according to another embodiment of the present disclosure.

Referring to FIGS. 17 and 18, the electrode assembly 105 of the present embodiment is a power generation apparatus capable of charging and discharging, and may include electrodes 115 and 125 and a separator 135. The electrodes 115 and 125 included in the electrode assembly 105 may include a positive electrode 115 and a negative electrode 125, with the separator 135 being interposed between the electrodes 115 and 125, so that the electrode assembly 105 may have a structure in which a positive electrode 115 / separator 135 / negative electrode 125 are alternately stacked. Here, the positions of the positive electrode 115 and the negative electrode 125 shown in FIGS. 4 and 5 are shown for the sake of convenience, and the positions can be changed over to each other.

Further, the electrode assembly 105 of the present embodiment may include adhesive layers 145 and 145' formed on side surfaces. The electrode assembly 105 may include adhesive layers 145 and 145' formed on side surfaces of a cell stack in which the electrodes 115 and 125 and the separator 135 are alternately stacked. Here, the cell stack refers to a stack of the electrodes 115 and 125 and the separator 135 in the electrode assembly 105 of the present embodiment, and may not include the adhesive layers 145 and 145'. Further, the side surface of the cell stack herein may refer to a surface where the ends of the plurality of electrodes 115 and 125 and/or the separator 135 are exposed in the cell stack in which the electrodes 115 and 125 and the separator 135 are alternately stacked. When manufacturing the electrode assembly 105, the size of the separator 135 may be provided larger than the size of the electrodes 115 and 125, and the end of the separator 135 may protrude beyond ends of the electrodes 115 and 125. Further, as will be described later, when the electrode assembly 105 is formed through zigzag stacking, the folded part of the separator 130 may protrude beyond the ends of the electrodes 115 and 125. Here, the protruded end of the separator 135 or the folded part of the separator 135 may be referred to as an 'extension part 138'.

The adhesive layers 145 and 145' may be formed by coating an adhesive. The adhesive may contain a component that is not easily dissolved in the electrolyte solution. Examples of adhesives used for the adhesive layers 145 and 145' include PO, PUR, EVA, and rubber series. Other examples include curable adhesives capable of natural curing, moisture curing, UV curing, and the like.

The adhesive layers 145 and 145' can be in contact with the extension part 138 of the separator 135, which is not in contact with the electrodes 115 and 125, thereby fixing the shape of the separator 135. The separator 135 and other separators 135 adjacent thereto may be fixed to each other by adhesive layers 145 and 145'.

The adhesive layers 145 and 145' may be in contact with the separator 135. At this time, the adhesive layer 145 is formed between the separators 135 as shown in FIG. 17, and thus may be formed such that the extension part 138 of the separator 135 corresponds to its position. The adhesive layer 145' may be formed to cover up to the outside of the extension 138 of the separator 135 as shown in FIG. 18.

It may be preferable that the adhesive layers 145 and 145' are not in contact with the positive electrode 115. This may be because the adhesive layers 145 and 145' disturbs the flow of ions moving from the positive electrode 115 to the negative electrode 125. In addition, it is preferable that the adhesive layers 145 and 145' are not in contact with the negative electrode 125, but the negative electrode 125 is not a direct charging region. Thus, the effect may be less than that of contact between the positive electrode 115 and the adhesive layers 145 and 145'.

The adhesive layers 145 and 145' may be formed on all side surfaces of the electrode assembly 105, but may be preferably formed only on partial side surfaces. This may be because, when the adhesive layers 145 and 145' are formed on all side surfaces of the electrode assembly 105, the adhesive layer 145 disturbs gas discharge of the electrode assembly 105 during the electrolyte impregnation or activation process of the electrodes 115 and 125.

The adhesive layers 145 and 145' may be formed to cover all one side surface of the electrode assembly 105, or may be formed so as to cover 70 to 80% of the side surface. Here, the side surface of the electrode assembly 105 may have a 'height' formed through stacking and a 'width' corresponding to the length of the long side or short side of the electrode assembly 105, wherein the adhesive layers 145 and 145' may be formed to cover 70 to 80% of the width of the side surface of the electrode assembly 105. Since the adhesive layers 145 and 145' do not cover all side surfaces of the electrode assembly 105, it is possible to prevent gas discharge of the electrode assembly 105 from being disturbed by the adhesive layers 145 and 145' in the electrolyte impregnation or activation process of the electrodes 115 and 125.

The adhesive layers 145 and 145' may be formed on a surface on which the long side of the separator 135 is located among side surface of the electrode assembly 105. The adhesive layers 145 and 145' may be formed on the long side of the separator 135. This may be because the folding phenomenon occurs more frequently along the longer sides of the separator 135, which are relatively longer than the shorter sides. However, this description does not completely exclude the possibility of forming the adhesive layers 145 and 145' on the short side of the separator 135.

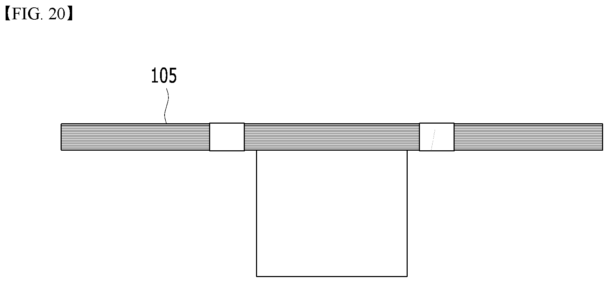

FIG. 19 is a photograph taken from a side surface of the electrode assembly. FIG. 20 is a diagram showing the stiffness test of an electrode assembly.

Referring to FIGS. 19 and 20, a phenomenon in which the ends of the separator 135 are folded can be prevented by the adhesive layers 145 and 145', and the stiffness of the electrode assembly 105 can be supplemented.

Specifically, it was confirmed that the adhesive layers 145 and 145' are formed on the side surfaces of the electrode assembly 105, thereby improving a folding phenomenon that appears in the region A of FIG. 2. In addition, even in the same test as in FIG. 3, it was confirmed that a phenomenon in which a part of the electrode assembly 105 sags does not occur in FIG. 20, so that the minimum stiffness required for the electrode assembly 105 is secured by the adhesive layers 145 and 145'. By supplementing the stiffness of the electrode assembly 105 in this way, excessive deformation of the electrode assembly 105 can be prevented when an external force is applied.

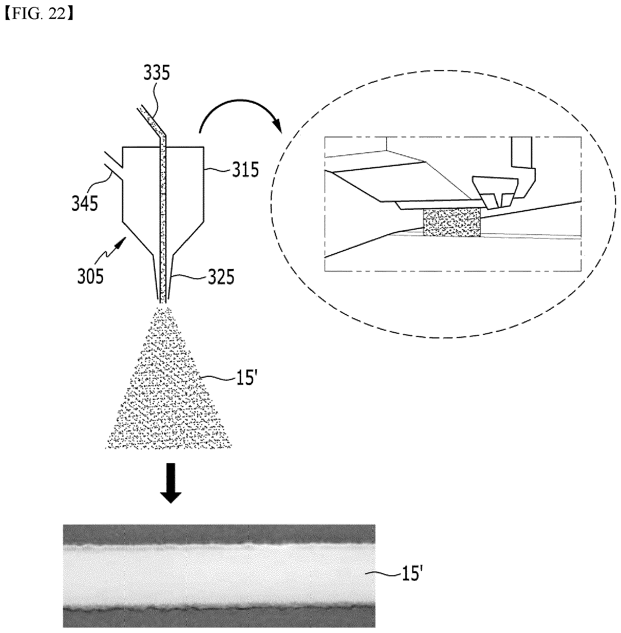

FIG. 21 is a diagram showing an example of a device for coating an adhesive onto an electrode assembly and the coated adhesive. FIG. 22 is a diagram showing another example of a device for coating an adhesive to an electrode assembly and the coated adhesive.

Referring to FIG. 21, the adhesive layers 145 and 145' of the present embodiment may be formed in a pattern method. Here, the pattern method may mean applying the adhesive so that the adhesive 15 coated to the target position has a predetermined pattern.

The pattern type adhesive coating apparatus 205 may include a housing 215 and a nozzle 225. The adhesive 15 may be supplied from the outside of the apparatus 205 and housed in the housing 215, and the adhesive 15 that has passed through the nozzle 225 may be discharged in the form of lines. Specifically, the adhesive coming out of the nozzle 225 may be connected in a thin line and coated in a wobble pattern. The coated adhesive 15 may have a specific pattern depending on the movement of the nozzle 225. As an example, the bottom of FIG. 21 shows that the adhesive 15 is spirally coated to form a pattern shape in which a plurality of circular shapes are overlapped. Such pattern shapes may also be referred to as a pig tail shape or a swirl pattern.

Referring to FIG. 22, the adhesive layers 145 and 145' of the present embodiment may be formed by a surface coating method . Here, the surface coating method may mean coating the adhesive at a high density so that the adhesive 15 is coated onto the target position without gaps.

The surface coating type adhesive coating apparatus 305 may coat the adhesive 15 so that the adhesive 15 covers the entire target portion, as shown in the lower photograph of FIG. 22. The surface coating type adhesive coating apparatus 305 may coat an adhesive through a spray, slot, or other method. As an example, the surface coating type adhesive coating apparatus 305 may include an air tube 345 that injects a compressed air when the adhesive 15 is sprayed through the housing 315, the nozzle 325, the tube 335 through which the adhesive 15 is supplied into the housing 315, and the nozzle 325 connected to the tube 335.

On the other hand, since the surface coating type adhesive coating apparatus 305 of FIG. 22 uses compressed air or the like, there is a risk that a scattering phenomenon occurs in which the adhesive 15' scatters when the adhesive 15 is sprayed. In addition, when the thickness of the adhesive layers 145 and 145' is to be increased, there is a drawback that the uniformity of the adhesive layers 145 and 145' is deteriorated.

Meanwhile, since the adhesive coating apparatus 205 of FIG. 21 discharges the adhesive 15 in a linear shape, it is possible to minimize the adhesive scattering phenomenon due to air or the like, and to minimize the contamination of the apparatus. In addition, the apparatus 205 shown in FIG. 21 can relatively freely adjust the density and thickness of the adhesive layers 145 and 145' by adjusting the interval between the lines. The apparatus 205 of FIG. 21 coats the adhesive 15 in a fixed pattern and thus, it can coat the adhesive more uniformly than the adhesive coating apparatus 305 of FIG. 22 even when it is desired to form thicker adhesive layers 145 and 145'.

The apparatus 205 of FIG. 21 can minimize the thickness of the adhesive layers 145 and 145' more than the apparatus 305 of FIG. 22. Specifically, the thickness of the adhesive layers 145 and 145' formed through the apparatus 205 of FIG. 21 is about 100 um or more, whereas the adhesive layers 145 and 145' formed by the apparatus 305 of FIG. 22 may have a thickness of about 200 um or more. This may be because the apparatus 205 of FIG. 21 applies the adhesive 15 in a linear shape, as described above.

The thickness of the adhesive layers 145 and 145' formed on the electrode assembly 105 may be variously set according to design. For example, considering the separation space between the electrode assembly 105 inside the battery cell and the battery case, the thickness of the adhesive layers 145 and 145' may be designed to be less than or equal to that. In a specific example, when the electrode assembly 105 is embedded in the battery case in a state where the adhesive layers 145 and 145' are not formed, a separation distance between the electrode assembly 105 and the battery case may be around 600 um. In such a case, the thickness of the adhesive layers 145 and 145' formed on the electrode assembly 105 may be 600 um or less, 500 um or less, 400 um or less, 300 um or less, or 200 um or less. Further, the adhesive layers 145 and 145' formed on the electrode assembly 105 may have a thickness of 100 to 600 um, 100 to 500 um, 100 to 400 um, 100 to 300 um, or 100 to 200 um. At this time, the adhesive layers 145 and 145' may be formed by repeatedly stacking lines by the apparatus 205 of FIG. 8.

The adhesive 15 provided through the adhesive application apparatus may have a predetermined temperature. This may be because the adhesive coating apparatus adjusts the temperature of the adhesive 15 so that the adhesive 15 is easily applied. The operating temperature of the apparatus 205 of FIG. 21 is 110°C, and the temperature of the adhesive 15 discharged from the apparatus 205 may be in the range of 40°C to 50°C. The operating temperature of the apparatus 305 in FIG. 22 is 160°C, and the temperature of the adhesive 15 discharged from the apparatus 205 may be in the range of 60°C to 70°C. When the temperature of the adhesive 15 is high, there is a high possibility that the separator 135 will shrink. Therefore, it may be preferable to use the apparatus 205 of FIG. 21 rather than the apparatus 305 of FIG. 22 to form the adhesive layers 145 and 145' of this embodiment.

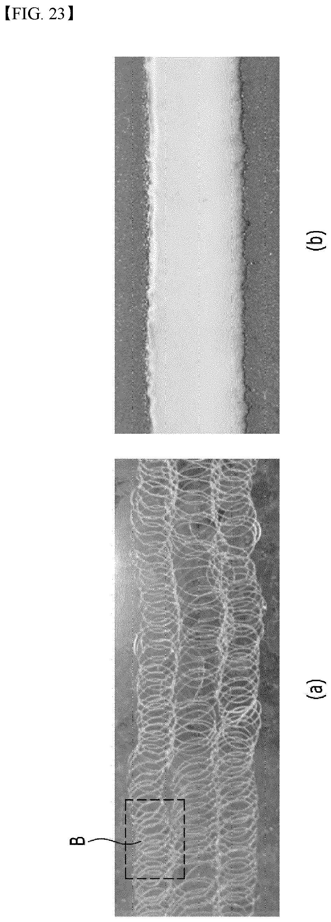

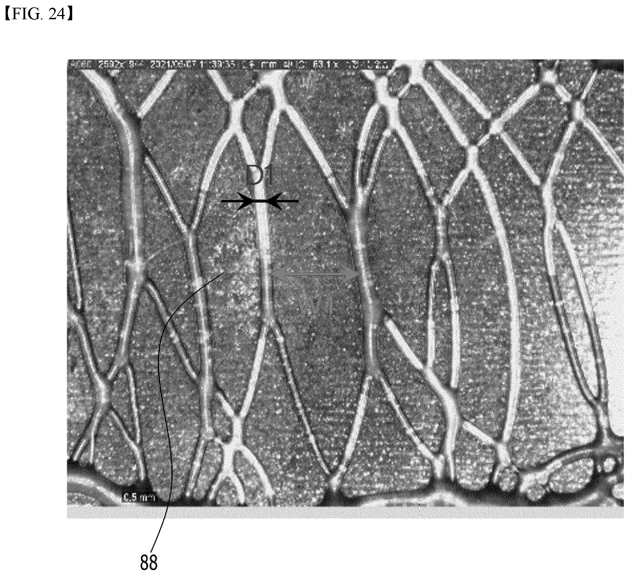

FIG. 23 is a photograph comparing adhesives coated using the apparatuses of FIGS. 21 and 22. FIG. 24 is an enlarged photograph of a region B of FIG. 23.

Referring to FIGS. 23 and 24, the coating shapes of the adhesive according to the apparatuses of FIGS. 21 and 22 can be compared. The corresponding shape may be the shape of the adhesive layers 145 and 145' coated onto the side surface of the electrode assembly 105.

FIG. 23(a) is based on a pattern method, and may be formed by the apparatus 205 of FIG. 21. In FIG. 23(a), the adhesive 15 discharged in a linear shape is repeated in a spiral or circular pattern to form a pattern. The adhesive layers 145 and 145' formed by the pattern method may have a pattern in which at least two lines intersect. The adhesive layers 145 and 145' formed by the pattern method may include a plurality of openings 88. The line width of the adhesive 15 by the pattern method may be 20 to 100 um, and the interval between the lines may be 100 to 800 um.

Referring to FIG. 24, it was more clearly confirmed that the adhesive layers 145 and 145' have a pig tail pattern. It was confirmed that the first line width d1 measured from the photograph is 50 um, and the first line interval w1 is 600 um.

Meanwhile, FIG. 23(b) is based on a surface coating method, and may be formed by the apparatus 305 of FIG. 22. In FIG. 23(b), there are no gaps between the adhesives 15, and the adhesives are coated to form one surface. In FIG. 23(b), unlike FIG. 23(a), no pattern formed by intersecting at least two lines was observed, confirming that no openings are not formed in the adhesive layers 145 and 145'.

Meanwhile, since the adhesive layers 145 and 145' of the present embodiment are formed on the side surfaces of the electrode assembly 105, the adhesive layers 145 and 145' may prevent contact between the electrodes 115 and 125 and the electrolyte solution absorbed through the side surface of the electrode assembly 105. Therefore, the adhesive layers 145 and 145' may be formed so as to minimize the decrease in absorption of the electrolyte solution.

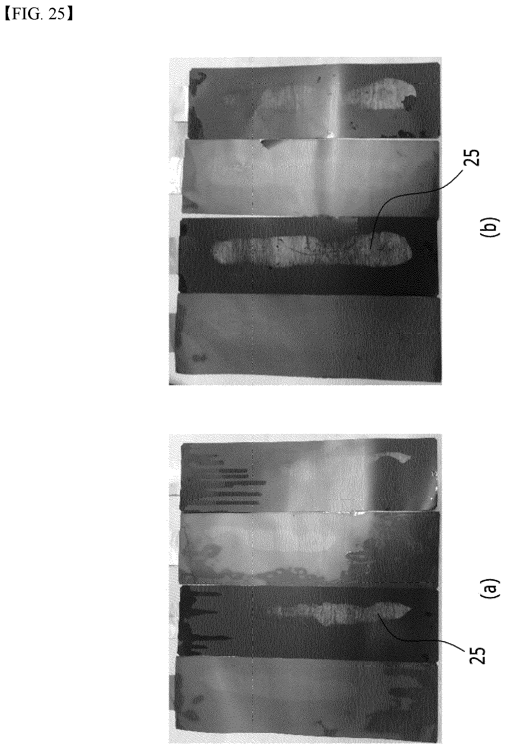

FIG. 25 is a photograph taken during a wettability test of an electrode assembly to which the process of FIGS. 21 and 22 is applied. Specifically, FIG. 25 is an exploded view of the electrode assembly 105 having the adhesive layers 145 and 145' formed through the processes of FIGS. 21 and 22 after being impregnated with an electrolyte solution. Through the photograph, the portion of the electrodes 115 and 125 where the electrolyte is not absorbed can be confirmed as a non-wetting region 25. Based on this, it can be confirmed whether or not the wettability of the electrodes 115 and 125 with respect to the electrolyte solution is reduced by the adhesive layers 145 and 145'. Here, the smaller the non-wetting region 25 may mean that the contact between the electrodes 115 and 125 and the electrolyte is sufficient.

Referring to FIG. 25, it can be confirmed that the electrode of FIG. 25(a) to which the pattern method of FIG. 21 is applied has a smaller non-wetting region 25 than the electrode of FIG. 25(b) to which the surface coating method of FIG. 22 is applied. In other words, the adhesive layers 145 and 145' formed according to FIG. 21 may be less impeding absorption of the electrolyte solution than the adhesive layers 145 and 145' formed according to FIG. 22.

Since the pattern coating method of FIG. 21 has a pattern in which a number of lines intersect, it may be formed to include a plurality of openings in the adhesive layers 145 and 145' of FIGS. 17 and 18. When the electrode assembly 105 is immersed in the electrolyte solution, the electrolyte solution may be absorbed into the electrode assembly 105 through the opening, so that the adhesive layers 145 and 145' formed by the pattern coating method can minimize the decrease in permeation of the electrolyte solution compared to the adhesive layers 145 and 145' formed by the surface coating method.

If the electrolyte solution is not well absorbed by the electrodes 115 and 125, the output characteristics of the electrode assembly 105 may be deteriorated. Therefore, even when the adhesive layers 145 and 145' are formed by the surface coating method of FIG. 22, the adhesive layers 145 and 145' is partially formed on the side surface of the electrode assembly 105, thereby capable of increasing the absorption rate of the electrolyte solution. However, when the adhesive layers 145 and 145' are partially formed in this way, the stiffness of the electrode assembly 105 may decrease as shown in FIG. 3. Therefore, the coating positions and coating levels of the adhesive layers 145 and 145' may need to be designed more carefully.

Next, an electrode assembly according to another embodiment of the present invention will be described.

Prior to the description, it will be clarified that the electrode assembly of the present embodiment is the same as the electrode assembly described above, except that the shape of the cell stack is different. Therefore, even if there is no separate mention, the electrode assembly according to the present embodiment can be explained as including all the contents of the electrode assembly of FIGS. 17 to 25 described above.

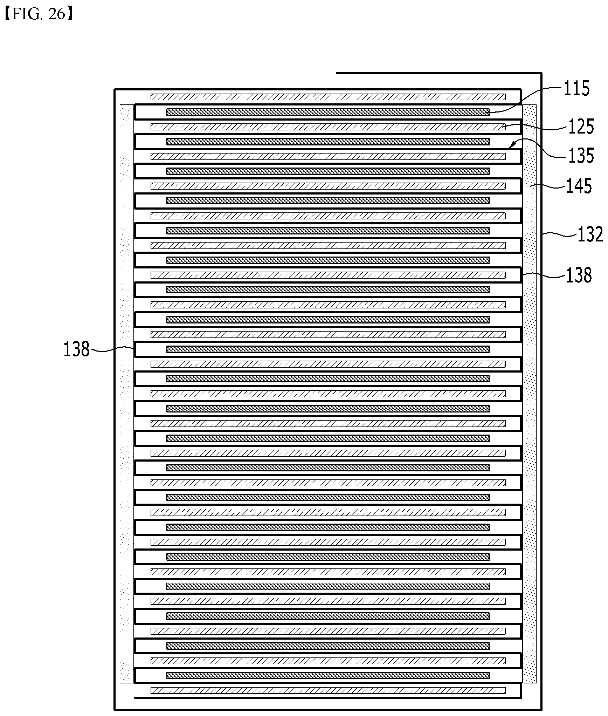

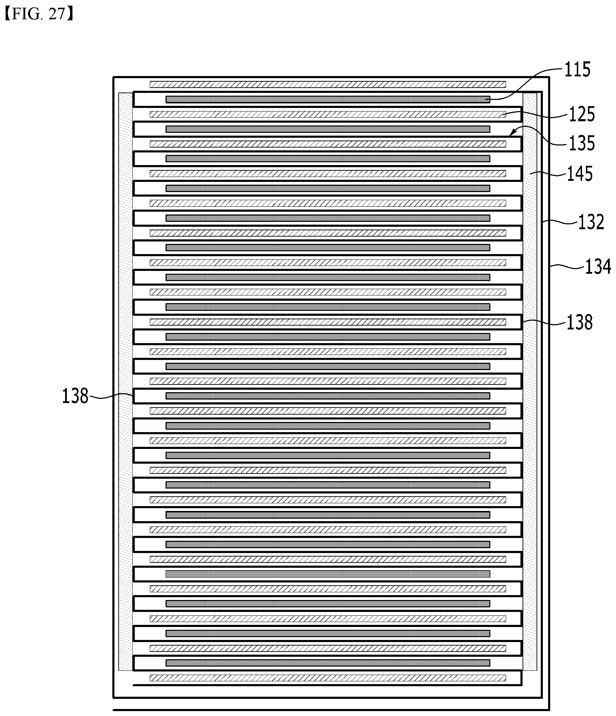

FIGS. 26 and 27 are diagrams showing an electrode assembly according to another embodiment of the present disclosure.

Referring to FIGS. 26 and 27, the electrode assembly 105 of the present embodiment may include a cell stack in which the positive electrode 115/separator 135/negative electrode 125 are alternately stacked, and a finished separators 132 and 134 that surrounding the side surface of the cell stack. Here, the separator 135 has a zigzag shape formed by folding a rectangular separator sheet, and the separator 135 folded in a zigzag pattern may be interposed between the positive electrode 115 and the negative electrode 125. After the zigzag stacking is completed, the separator 135 may cover the side surfaces of the cell stack at least once through the finished separators 132 and 134, and thereby the side surfaces of the cell stack may be finished. At this time, the positions of the positive electrode 115 and the negative electrode 125 shown in FIGS. 26 and 27 are shown for the sake of convenience, and the positions can be changed over to each other.

The adhesive layers 145 and 145' may be formed on side surfaces of the cell stack. The adhesive layers 145 and 145' are in contact with the extension part 138 of the separator 135 and connects the extension part 138 to thereby fix the shape of the separator 135. The adhesive layers 145 and 145' connect the folded portion of the separator 135, that is, the folded portion of the separator 135, thereby capable of fixing the overall shape of the separator 135. The adhesive layers 145 and 145' can fix the overall shape of the cell stack including the separator 130 and ensure minimum stiffness.

The adhesive layers 145 and 145' may be formed on all side surfaces of the cell stack as described above, but may be formed on both side surfaces where the folded separator 135 is located, as shown in FIGS. 26 and 27. Further, unlike those shown in FIGS. 26 and 27, it may also be possible to form the other side surface of the cell stack. However, since the discharge of gas from the electrode assembly 105 may be disturbed by the adhesive layers 145 and 145' in the electrolyte impregnation or activation process of the electrodes 115 and 125, the positions of the adhesive layers 145 and 145' need to be properly designed, and it may not be desirable to cover all side surfaces of the cell stack. In addition, the adhesive layers 145 and 145' may be formed to completely cover one side surface of the electrode assembly 105, or may be formed to cover 70 to 80% of the side surface.

After the adhesive layers 145 and 145' are formed on the cell stack, the finished separators 132 and 134 may be formed on the outside of the adhesive layers 145 and 145'. The finished separators 132 and 134 may cover side surfaces of the cell stack on which the adhesive layers 145 and 145' are formed, wherein as shown in FIG. 26, the finished separator 132 wraps around the cell stack as a whole, so that the side surfaces of the cell stack can be wrapped once and then finished. In addition, the finished separators 132 and 134 are formed by surrounding two or more turns around the cell stack as shown in FIG. 27, so that the side surfaces of the cell stack can be wrapped two or more times and then finished.

Meanwhile, without forming the finished separators 132 and 134 in the electrode assembly 105, the side surface of the cell stack may be finished by attaching an adhesive means such as heat fusion or adhesive tape, and the finishing method may be variously modified and implemented in addition to the above-described embodiment.

Next, a method for manufacturing an electrode assembly according to one embodiment of the present disclosure will be described.

The manufacturing method S1000 of the electrode assembly of this embodiment may include a step S1100 of forming a cell stack in which the electrodes 115 and 125 and the separator 135 are alternately stacked; a step S1200 of coating the adhesive 15 to the side surface of the cell stack; and a step S1300 of forming the adhesive layers 145 and 145' fixing the separator 135.

Here, for the step S1100 of forming the cell stack, any known method can be used as long as electrodes and separators are stacked in the order of positive electrode 115, separator 135, negative electrode 125, and separator 135, and in the order of the negative electrode 125, separator 135, positive electrode 115, and separator 135. For example, the cell stack may be manufactured in a stack type as shown in FIGS. 17 and 18 or in a zigzag form as shown in FIGS. 26 and 27.

Here, in the step S1200 of coating the adhesive onto the side surface of the cell stack, the apparatus 205 of FIG. 21 may be used or the coating apparatus 305 of FIG. 22 may be used. In the case of using the apparatus 205 of FIG. 21, the step S1200 may include a step of determining the coating pattern of the adhesive 15, and/or a step of pattern-coating the adhesive by moving the nozzle 225 to the determined pattern. Here, the step of determining the coating pattern of the adhesive 15 may be performed before the step S 1100 of forming the cell stack.

Since the adhesive 15 is coated in a state having a viscosity, it may be desirable to fix the shape of the adhesive 15 by removing solvent or moisture in the adhesive. In such a case, the step S1300 of forming the adhesive layers 145 and 145' may include a step of drying the adhesive 15. Further, depending on the intrinsic properties of the adhesive 15, the adhesive 15 may be solidified by thermal curing or UV curing. In such a case, the step S 1300 of forming the adhesive layers 145 and 145' may include a step of curing the adhesive 15.

Meanwhile, if the present embodiment is a method of manufacturing the zigzag electrode assembly 105 shown in FIGS. 26 and 27, the above-mentioned manufacturing method may further include a step S1400 of finishing the side surface of the cell stack. Through this step, the finished separators 132 and 134 may be formed on the side surfaces of the cell stack. The finished separators 132 and 134 may surround the side surfaces of the cell stack at least once, and then may be subjected to finishing treatment. The finished separators 132 and 134 may cover the side surfaces of the cell stack once as shown in FIG. 26, or may cover the side surfaces of the cell stack two or more times as shown in FIG. 27.

Meanwhile, the electrode assembly 105 of the present embodiment described above may be housed in a cell case together with an electrolyte solution and provided as a secondary battery, that is, a battery cell.

A battery cell according to one embodiment of the present disclosure may include an electrode assembly 105 in which a plurality of electrodes and a plurality of separators are alternately stacked, electrode leads connected to electrode tabs extending from the plurality of electrodes, and a cell case for sealing an electrode assembly in a state where one end of an electrode lead protrudes.

On the other hand, the battery cells described above can be stacked in one direction to form a battery cell stack, and can be housed inside a module case that houses the battery cell stack to be modularized into a battery module. Further, the battery module can be combined together with a battery management system (BMS) and/or a cooling apparatus that control and manages the battery's temperature, voltage and the like to form a battery pack. The battery pack can be applied to various apparatuses. For example, the apparatus to which the battery pack is applied may be a vehicle means such as an electric bicycle, an electric vehicle, or a hybrid vehicle, but the present disclosure is not limited thereto, and the battery pack according to the present embodiment can be used for various apparatuses in addition to the above illustrations, which also falls within the scope of the present disclosure.

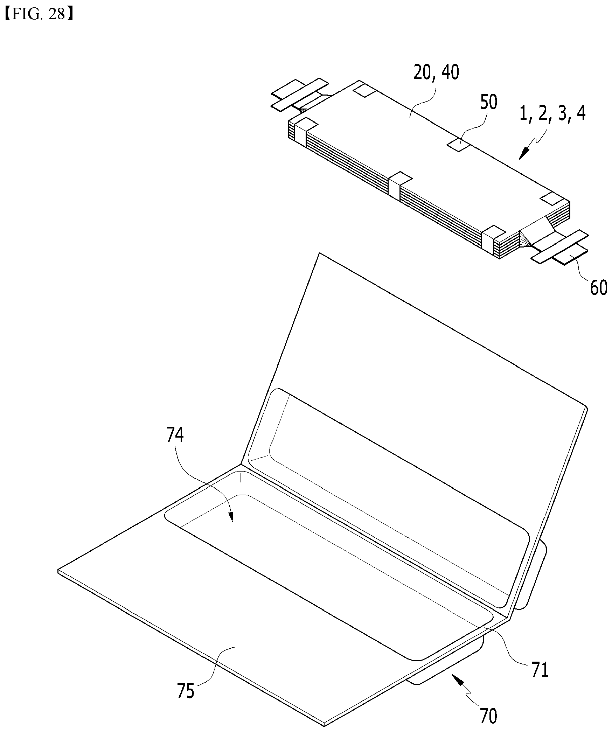

FIG. 28 is a perspective view showing an initial cell manufacturing step in the secondary battery manufacturing method according to another embodiment of the present disclosure. FIG. 29 is a front view showing a formation process of a secondary battery manufacturing method according to another embodiment of the present disclosure.

Referring to FIG. 28 , the secondary battery manufacturing method according to the present embodiment may include an initial cell manufacturing step after the electrode assembly manufacturing step.

The initial cell manufacturing step may be a step of housing the electrode assemblies 1, 2, 3, and 4 described above in a pouch case 70, injecting the electrolyte solution into a pouch case 70, and sealing the pouch case rim 71 to manufacture an initial cell (0) of FIG. 29. The pouch case 70 may include a gas pocket part 75 extending to one side of the cup part 74 in which the electrode assemblies 1, 2, 3, and 4 are housed. After housing the electrode assemblies 1, 2, 3 and 4 and the electrolyte solution in the cup part, the pouch case rim 71 may be sealed.

In this case, sealing may be performed at the rim of the cup part 74 and the outer rim of the gas pocket part 75. That is, the rim of the region where the cup part 74 and the gas pocket part 75 are combined is sealed so as to draw a closed curve, so that a region where the cup part 74 and the gas pocket part 75 are combined may be sealed to be hermetically sealed from the outside. That is, the structure is such that the sealed cup part 74 and the gas pocket part 75 can communicate with each other while being disconnected from the outside.

When the initial cell 0 of FIG. 29 is manufactured in a sealed shape with the outside, a step of post-processing the initial cell 0 to manufacture a final cell may be performed. In the final cell manufacturing step, the adhesive coated onto at least one surface of the electrode and the separator 13 or 322 in the previous basic unit body manufacturing step may be dissolved. The electrolyte solution contained in the initial cell 0 may be an organic solvent. The adhesives 14 and 34 being dissolved may mean that the adhesives 14 and 34 are dissolved in the electrolyte solution, which is an organic solvent.

Therefore, it may mean that the adhesives 14 and 34, which is coated and remains onto the surface of the electrodes or the separators 13 and 322, is reduced in the coating region, or the coated adhesives 14 and 34 are completely removed.

Here, in the case of the electrodes 11, 12 and 31, it may mean that the adhesives 14 and 34 do not remain on the surface of the electrodes.

Further, in the case of the separators 13 and 322, part of the adhesive 14, 34 may permeate the separators 13 and 322 in that the separators 13, 322 are generally porous sheets. At this time, in the final cell manufacturing step described above, the adhesives 14 and 34 penetrating the separators 13 and 322 can be dissolved into the electrolyte solution, and in this process, coating marks of the adhesives 14 and 34 may remain on the separators 13 and 322.

Here, the coating marks of the adhesives 14 and 34 mean that the components of the adhesives 14 and 34 do not remain, but a part of the outer surfaces of the separators 13 and 322 are deformed by the adhesives 14 and 34. However, without being limited thereto, the coating marks of the adhesives 14 and 34 may mean traces that can confirm whether or not the adhesives 14 and 34 are coated by various methods, such as traces that can visually confirm whether or not the adhesives 14 and 34 are coated.

Accordingly, the coating marks of the adhesives 14 and 34 formed on the separators 13 and 322 may be formed at the same positions as the positions where the adhesives 14 and 34 are coated.

In particular, the adhesives 14 and 34 for adhering electrodes and separators used in the secondary battery manufacturing method according to the present embodiment may be acrylate-based adhesives. As the acrylate-based adhesives 14 and 34 are used, it may be possible for the adhesives 14 and 34 to dissolve into the electrolyte solution.

In the secondary battery manufacturing method according to the present embodiment, the final cell manufacturing step may include a formation process that charges and activates the initial cell 0 at elevated temperatures above room temperature. The formation process (activation process) is a process of forming an SEI layer on the surface of the electrode plates of the electrode assembly through a charging process and making it charge, through which the secondary battery can supply power.

In the final cell manufacturing step, the formation process may be performed at a temperature of 45 degrees Celsius or higher. Further, at least a part of the adhesives 14 and 34 may be dissolved in the formation process. And more preferably, in the final cell manufacturing step, the formation process may be performed at a temperature between 50 and 70 degrees Celsius. Dissolution of the adhesive 14 may occur more easily at 50 degrees or more, which is higher than 45 degrees. In addition, performance degradation of cell products may occur at a temperature of 70 degrees or more, which is not preferable.

Further, referring to FIG. 29, in the final cell manufacturing step in the secondary battery manufacturing method according to the present embodiment, the formation process may include a jig pressing process of pressing both side surfaces of the initial cell 0 using a jig 500. It may be a method of pressing the left side of the initial cell 0 with the left jig 510 and pressing the right side jig 520 of the initial cell 0 with the right jig 520. When the initial cell 0 is pressed with the jig 500, gas generated inside the electrode assemblies 1, 2, 3 and 4 can smoothly move to the gas pocket part 75 of FIG. 29. The gas moved to the gas pocket part 75 can be smoothly discharged to the outside of the cell in a subsequent degassing process. When the jig pressing process is performed during the formation process, the process of dissolving the adhesives 14 and 34 in the electrolyte solution may be more easily performed.

Here, the jig pressing process may include a process of applying and releasing the pressure of the jig 500 that presses both side surfaces of the initial cell 0. That is, the one-cycle process which the jig 500 applies pressure to the initial cell 0 and then releases it can be repeated at least twice.

The one-cycle process in which the jig 500 applies and releases pressure may be a process of directly exerting physical force on the adhesives 14 and 34 being dissolved by alternating positive pressure and negative pressure. Therefore, it is possible to obtain an effect of allowing dissolution of the adhesives 14 and 34 to occur significantly better.

In this case, a control apparatus may be connected to the jig apparatus for a more systematic operation. Thereby, the positive pressure time and the negative pressure time can be adjusted, and the magnitude of the positive pressure and the magnitude of the negative pressure can also be controlled. Through this, a more effective adhesive dissolving system can be realized.

In particular, in the final cell manufacturing step in the secondary battery manufacturing method according to an embodiment of the present invention, the formation process is performed at a temperature between 55 degrees Celsius and 65 degrees Celsius, and at the same time, may include a jig pressing process of pressing both side surfaces of initial cell 0 using the jig 500. In this case, all of the adhesives 14 and 34 are dissolved in the formation process, and thus the adhesives 14 and 34 may not remain on the surface of the electrode. In addition, coating marks of the adhesives 14 and 34 may remain on the separators 13 and 322 as described above.

If the adhesives 14 and 34 remain on the electrode surface, the corresponding region where the adhesives 14 and 34 remain may become an unreacted region in which electrode reaction does not occur, which may result in deterioration of battery performance. However, if the adhesives 14 and 34 are completely dissolved and disappeared from the surfaces of the electrodes and/or separators 13 and 322 as in the present disclosure, the unreacted region due to the adhesives 14 and 34 disappears, thereby preventing deterioration in performance and realizing excellent battery performance.

Meanwhile, the final cell manufacturing step in the secondary battery manufacturing method according to the present embodiment may further include a pre-aging process of storing the initial cell (0) at room temperature before the formation process. The room temperature pre-aging process may be performed for about 1.5 days. The pre-aging process may be a process of giving time so that the electrolyte solution is sufficiently impregnated between the electrode and the separator 13 or 322. Of course, at least a part of the adhesives 14 and 34 may be dissolved even in the pre-aging process.

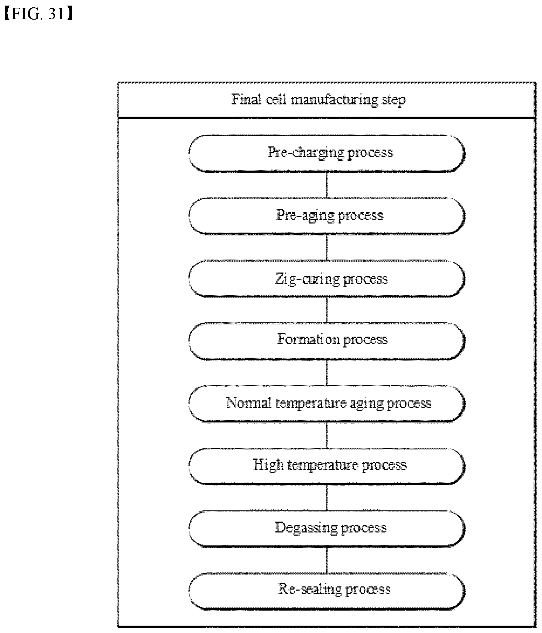

When the electrolyte solution according to the present embodiment is a Gelyte electrolyte solution, the secondary battery manufacturing method according to the present embodiment may further include a step of pre-charging before the electrolyte impregnation step or after the electrolyte impregnation step (see FIG. 31). As an example, it can be charged up to 1.7V with a current of 0.05C.

In addition, the final cell manufacturing step in the secondary battery manufacturing method according to the present embodiment may further include a normal temperature aging process of storing the initial cell (0) at normal temperature after the formation process. The normal temperature aging process may be performed for about 1 day. In addition, the final cell manufacturing step may further include a high-temperature aging process in which the initial cell (0) is stored at a temperature of 60 to 65 degrees Celsius after the normal temperature aging process and before the degassing process. Here, the normal temperature aging process and the high temperature aging process may be switched in order.

Further, the final cell manufacturing step in the secondary battery manufacturing method according to the present embodiment may include a degassing process after the high-temperature aging process. The degassing process may be a process of discharging internal gas of the initial cell 0 to the outside. The gas discharged in the degassing process may be the gas in which the internal gas mainly generated in the formation process was stored in the gas pocket part 75. The degassing process can form a through hole in the gas pocket part 75 to discharge the gas to the outside.

The final cell manufacturing step may include a re-sealing process of re-sealing the initial cell 0 so as to be sealed with the outside again after the degassing process. This allows the final cell manufacturing process to manufacture the final cell. The adhesives 14, 34 may no longer remain on the surfaces of the internal electrodes or separators 13 and 322 of the final cell manufactured in this way. In particular, as described above, coating marks of the adhesives 14 and 34 may remain on the separators 13 and 322.

Meanwhile, the secondary battery manufacturing method according to the present embodiment may further include a finishing charge/discharge step of charging and discharging the final cell after the final cell manufacturing step. The finishing charge and discharge step may include a step of measuring the battery capacity of the final cell, and may include a process of finally charging the battery up to a set voltage for shipment of the final product.

When the electrolyte solution according to the present embodiment is a Gelyte electrolyte solution, the secondary battery manufacturing method according to the present embodiment may further include a step of curing at 60-65 degrees Celsius for about 5 hours before the formation process (see FIG. 31). The curing process can cure the liquid electrolyte solution into a gel form. Further, it is preferable to perform jig curing in order to uniformly cure the electrolyte solution within the electrode. The jig curing process is performed by curing in a state where both side surfaces of the battery cell are uniformly pressed, so that the electrolyte solution may be uniformly cured within the electrode. This is because the jig curing process allows the electrolyte solution to be evenly distributed within the electrode.

Hereinafter, the contents of the present disclosure will be described with reference to more specific experimental examples, but the following experimental examples are presented for illustrative purposes only, and are not intended to limit the scope of the present disclosure.

### <Experimental Example - Confirmation of coating marks of adhesive>

A battery cell that houses an electrode assembly, in which a positive electrode, a negative electrode and a separator were alternately stacked, and an electrolyte solution together was manufactured. Here, an adhesive was coated in the form of a plurality of dots between the positive electrode and the separator and between the negative electrode and the separator. Here, the separator is CCS (Ceramic Coated Separator), the adhesive includes an acrylate-based adhesive material, and the electrolyte solution may be a standard electrolyte solution in which ethylene carbonate (EC) and ethylmethyl carbonate (EMC) are mixed at a ratio of 3:7.

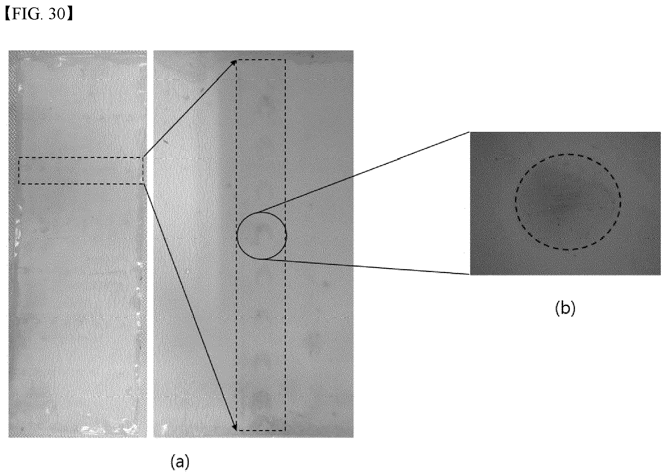

Then, the manufactured battery cells were charged, the separator was separated from the charged battery cell, and the separated separator was washed and dried with acetone to remove the electrolyte solution absorbed in the separated separators, and the surface of the separator was observed. The results are shown in FIG. 30. FIG. 30(a) is an image confirmed by the naked eye, and FIG. 30(b) is an enlarged image taken with a microscope.

### <Analysis of test results - Confirmation of coating marks of Adhesive>

Referring to FIGS. 30(a) and (b), it can be confirmed that in the separator separated from the charged battery cell, the adhesive leaves marks on the separator. In particular, it can be confirmed that when photographed by enlarging with a microscope as shown in FIG. 30(b), coating marks of the adhesives left on the separator were more easily observed.

That is, it can be confirmed that in the battery cell according to the present embodiment, through the adhesive coating marks left on the outer surface of the separator, adhesive was coated between the positive electrode and the separator and between the negative electrode and the separator in the electrode assembly unit.

While the embodiments of the present disclosure has been shown and described herein with reference to the accompanying drawings, it will be understood by those skilled in the art that various changes and modifications can be made therein without departing from the spirit and scope of the invention as defined by the appended claims.

### [Description of Reference Numerals]

0: initial cell
1,2,3,4: electrode assembly
70: pouch case
71: pouch case rim
75: gas pocket part
10, 30: basic unit body
11, 3112: first electrode
11-1, 311: first electrode reel
12, 3122: second electrode
12-1, 312: second electrode reel
13, 322: separator
14, 34: adhesive
20, 40: electrode stack
50: fixing tape
60: electrode lead
110: lower separator reel
111: lower separator sheet
120: upper separator reel
121: upper separator sheet
130: 4-layer structured stack
138: extension part
205, 305: adhesive coating apparatus
210, 371: nozzle
211, 371: first nozzle
212, 372: second nozzle
213: third nozzle
221, 331: first cutter
222, 332: second cutter
223: third cutter
230: pressure nip roll
341, 342: first and second transport devices
500: jig
510: left jig
520: right jig
P1, P2: first and second adhesive parts

## Claims

1. An electrode assembly in which electrodes and separators are alternately stacked, the electrode assembly comprising:
a first adhesive part formed between the electrode and the separator, and
a second adhesive part formed between separators adjacent to each other among the plurality of separators contained in the electrode assembly,
wherein the second adhesive part is located on the outside of the first adhesive part.

2. The electrode assembly of claim 1, wherein:
a first adhesive forming the first adhesive part and a second adhesive forming the second adhesive part are mutually different in kind.

3. The electrode assembly of claim 2, wherein:
the first adhesive has properties of being dissolved in an electrolyte solution.

4. The electrode assembly of claim 3, wherein:
the second adhesive has properties of being not dissolved in an electrolyte solution.

5. The electrode assembly of claim 1, wherein:
the first adhesive part comprises an adhesive pattern that is arranged at the same position between the electrode and the separator.

6. The electrode assembly of claim 1, wherein:
the first adhesive part comprises an adhesive pattern that is arranged so as to intersect each other between the electrode and the separator.

7. The electrode assembly of claim 1, wherein:
the separator is not coated with a binder onto the surface, or the content of the binder coated onto the surface is 3 wt.% or less.

8. The electrode assembly of claim 1,
further comprising an electrode tab protruding from one end of the electrode,
wherein an outer side of the first adhesive part is located in a direction intersecting with the protruding direction of the electrode tab.

9. The electrode assembly of claim 8, wherein:
the second adhesive part is located between the electrode tab and the separator.

10. The electrode assembly of claim 1, wherein:
at least one of the first adhesive part and the second adhesive part is formed by coating an adhesive in a dot shape.

11. The electrode assembly of claim 10, wherein:
the first adhesive part is formed by coating an adhesive in a dot shape.

12. The electrode assembly of claim 10, wherein:
the second adhesive part is formed of an adhesive layer having a plurality of openings.

13. The electrode assembly of claim 12, wherein:
the adhesive layer forming the second adhesive part is formed by partially coating an adhesive along the whole lengthwise direction of the electrode assembly.

14. The electrode assembly of claim 13,
further comprising an electrode tab protruding from one end of the electrode,
wherein the whole lengthwise direction is the same as the protruding direction of the electrode tab.

15. The electrode assembly of claim 1, wherein:
the second adhesive part connects the extension parts of the separator extending from an edge corresponding to a long side of the electrode.

16. The electrode assembly of claim 1, wherein:
the separator has a zigzag shape formed by folding a rectangular separator sheet.

17. The electrode assembly of claim 16, wherein:
a finished separator is located on the outside of the second adhesive part.

18. The electrode assembly of claim 15, wherein:
the separator has long sides facing each other and short sides facing each other, and
an adhesive layer forming the second adhesive part is formed along the long side of the separator.

19. The electrode assembly of claim 15, wherein:
the electrode includes a positive electrode and a negative electrode, and
the end part of the positive electrode is not in contact with the adhesive layer forming the second adhesive part.

20. The electrode assembly of claim 15, wherein:
the adhesive layer forming the second adhesive part has a pattern shape in which at least two lines intersect each other.

21. A secondary battery comprising:
an electrode assembly in which electrodes and separators are alternately stacked; and
a pouch case that houses the electrode assembly and the electrolyte solution together,
wherein the separator has at least one coating mark of the adhesive remaining on the surface in contact with the electrode, and
an adhesive part is formed between separators adjacent to each other among the plurality of separators contained in the electrode assembly.

22. The secondary battery of claim 21, wherein:
the coating mark of the adhesive is a mark of adhesive layer dissolved in the electrolyte solution, the adhesive layer being formed between the electrode and the separator.

23. The secondary battery of claim 22, wherein:
the adhesive layer is formed by coating an adhesive in the form of a plurality of dots, and
the coating mark of the adhesive is formed in a dot shape at a position where the adhesive layer is formed.

24. The secondary battery of claim 23, wherein:
the adhesive is an acrylate-based adhesive, and
the electrolyte solution is an organic solvent.

25. The secondary battery of claim 21, wherein:
the electrode includes a first electrode and a second electrode,
the separator includes an upper separator and a lower separator, and
the electrode assembly has a structure in which the lower separator, the first electrode, the upper separator, and the second electrode are alternately stacked.

26. The secondary battery of claim 21, wherein:
the electrode includes a first electrode and a second electrode, and
the electrode assembly is configured such that:
the first electrode is seated on the separator, so that one side of the separator is folded to cover the first electrode, and
the second electrode is seated on the separator, so that the other side of the separator is folded to cover the second electrode.

27. The secondary battery of claim 25 or 26, wherein:
an electrode tab is formed at one end of the electrode,
an adhesive layer is formed between the electrode tab and the separator, and
the adhesive layer includes an adhesive component that is not dissolved in the electrolyte solution.

28. The secondary battery of claim 27, wherein:
the adhesive layer is formed by coating an adhesive in the form of a plurality of dots.

29. The secondary battery of claim 21, wherein:
the electrolyte solution is a Gelyte electrolyte solution.

30. The secondary battery of claim 29, wherein:
the electrolyte solution comprises fluorine-based, poly-carbonate-based, or silicon-based oligomers.
